# EUROPEAN PATENT APPLICATION

(11) **EP 3 133 120 A1**
(43) Date of publication of application: **22.02.2017**
(21) Application number: 15722430.4
(22) Date of filing: 31.03.2015
(51) Int. Cl.: C08L 29/14, B29B 7/10, B29B 9/06, C03C 27/12, C08J 3/20, C08J 11/04, C08L 101/00

(54) **POLYVINYL BUTYRAL RESIN COMPOSITION, MOLDED ARTICLE AND METHOD FOR PRODUCING POLYVINYL BUTYRAL RESIN COMPOSITION**

(30) Priority: 31.03.2014 JP 2014071615
(71) Applicant: Glass Techno Synergy Co., Ltd., Shiga-ken 520-2101 (JP); Masuda Shoji Co., Ltd., Shiga 520-2437 (JP); Shiga Prefecture, Otsu-shi, Shiga 520-8577 (JP)
(72) Inventor: KOKURYO, Kazuto, Otsu-shi Shiga 520-2101 (JP); MASUDA, Yukitsugu, Yasu-shi Shiga 520-2437 (JP); KANZAWA, Takeshi, Nagahama-shi Shiga 526-0024 (JP)
(74) Representative: Kuhnen & Wacker
(86) International application number: PCT/JP2015/060254
(87) International publication number: WO 2015/152293

(57) **Abstract**

A PVB resin composition (R) contains PVB resin (P) and a first resin (Q). A resin molding (U) is formed from a resin (T). The resin (T) includes the PVB resin composition (R) added to a second resin (S). The first resin (Q) may be, for example, PE, PP, PS, ABS, PVC, PET, vinyl acetate, PC, acrylic resin or a copolymer thereof, or a plastic container-recycled material containing one of these resins.

## Description

### TECHNICAL FIELD

The present invention relates to a polyvinyl butyral resin composition, a molding and a method of manufacturing a polyvinyl butyral resin composition.

### BACKGROUND ART

Windshields of an automobile or the like are made of a glass laminate including two glass plates and an intermediate film sandwiched therebetween, where the intermediate film is made of a film of polyvinyl butyral resin (hereinafter also referred to as "PVB resin".

A glass laminate that has been disposed of is separated into the two glass plates and the intermediate film. Also, during a manufacturing process of glass laminates, edges of the intermediate film sandwiched between the two glass plates are cut off such that the film's shape conforms to that of the glass plates. Research has been made to reuse PVB resin of intermediate films peeled off glass laminates and residual edge material of PVB resin film.

If such PVB resin is to be reused as an intermediate film for a glass laminate, it must meet the strict conditions specified by the standards for the use as an intermediate film, resulting in very high costs. In addition, one of the reasons why the reuse of PVB resin as an intermediate film is costly is that intermediate films provided with acoustic insulation or heat-shielding properties, i.e. having multiple functions (hereinafter also referred to as "multifunctional film", or intermediate films colored with dye or the like are recycling on the market. Some multifunctional films have properties that impede recycling when melted and then again formed to be a film, making it difficult to reuse them as intermediate films. Intermediate films that have colored with dye or the like are not suitable for recycling. Therefore, it is necessary to extract intermediate films only formed from PVB resin material (hereinafter also referred to as "clear film") that are suitable for recycling from out of waste intermediate films mixed with multifunctional films or colored intermediate films. However, multifunctional films and clear films are not visually distinguishable, further increasing extraction costs. Further, colored clear films require a step of separating colored portions from uncolored portions, again increasing costs. For these reasons, waste intermediate films containing clear films and multifunctional films or the like are hardly reused as intermediate films for glass laminates.

In view of this, attempts have been made to reuse PVB resin films for purposes other than the purpose of recycling for intermediate films. For example, PVB resin films may be processed to be pellets or flakes, where PVB resin pellets may be mixed into another resin to reduce brittleness to provide a resin molding with good weatherability, strength and other properties.

A technique to process PVB resin into pellets or other forms to make a resin molding is disclosed in Patent Document 1 (JP 2005-193443 A), where PVB resin is kneaded with a filler such as paper, vegetable fiber, glass fiber, carbon and inorganic material and then pelletized. This document describes that this process makes a PVB resin, which is soft and sticky, moldable.

### CONVENTIONAL ART DOCUMENTS

### PATENT DOCUMENTS

Patent Document 1: JP 2005-193443 A

### SUMMARY OF THE INVENTION

### PROBLEMS TO BE SOLVED BY THE INVENTION

PVB resin has a chemical structural formula that contains a polyvinyl alcohol (PVA) structure, and thus has high water absorbency. Thus, when PVB resin films are formed into pellets or flakes, for example, they absorb water in air and exhibit high viscosity such that PVB resin aggregates to form clumps. Accordingly, it is difficult to process PVB resin as a raw material.

If, for example, PVB resin is added to another resin, the step of crushing aggregated PVB resin is required each time it is transported from one processing base to another. This increases costs. In addition, if aggregated PVB resin is to be crushed, a typical crusher has difficulty crushing PVB resin because PVB resin generates heat when crushed and becomes softer and this soft resin sticks to teeth of the crusher. Further, when crushed PVB resin is transported pneumatically through a pipe, PVB resin may aggregate during this pneumatic transportation, clogging the pipe.

Also, PVB resin used for recycling has various shapes, for example, a huge mass with a side of 1 meter or larger, resin sheets in different sizes, and resin powder. To feed such PVB resin into equipment such as a kneader, the shape and size of PVB resin must be more or less uniform. Again, PVB resin must be crushed, potentially increasing costs.

As discussed above, if PVB resin is to be reused for purposes other than the use as an intermediate film for a glass laminate (i.e. cascaded), processing PVB resin requires large costs. Especially those intermediate films separated from glass laminates or edges of intermediate films that have been cut off that contain multifunctional films are typically not processed with large costs for recycling since they are traded for lower prices than recycled PVB resin only made of clear film, and most of them are therefore disposed of as industrial wastes.

The technique described in Patent Document 1 mixes PVB pellets containing a filler with another melted resin, and fails to solve the problem that aggregation of PVB resin makes PVB resin difficult to mix with another resin.

An object of the present invention is to provide a PVB resin composition that can be easily mixed with another resin. Another object of the present invention is to provide a molding having good properties using a PVB resin composition. Still another object of the present invention is to provide a method of manufacturing a PVB resin composition that can be mixed with another resin.

### MEANS TO SOLVE THE PROBLEMS

The PVB resin composition of the present invention includes a first resin or a first rubber composition and a PVB resin. The first resin is at least one selected from the group including a polyolefin-based resin, a polystyrene-based resin, polyvinyl chloride, polyethylene terephthalate, vinyl acetate, polycarbonate, and an acrylic resin, and a copolymer thereof.

In the above arrangement, the PVB resin composition includes a PVB resin and a first resin or a first rubber composition, thereby reducing the stickiness of the PVB resin of the PVB resin composition. This prevents PVB resin composition from aggregating and forming a clump, allowing the PVB resin composition to be easily mixed with another resin or another rubber composition.

The molding of the present invention includes a second resin or a second rubber composition, and the PVB resin composition of the present invention.

In the above arrangement, the PVB resin composition includes a PVB resin and a first resin or a first rubber composition, again preventing PVB resin composition from aggregating and forming a clump. This allows the PVB resin composition to be properly mixed with the second resin or second rubber composition such that a molding containing the second resin or second rubber composition and the PVB resin composition may be easily manufactured. In a conventional PVB resin, the stickiness of the PVB resin may cause PVB resin pieces to stick to each other and forming a clump such that the PVB resin cannot be added to another resin; as the present invention allows the PVB resin composition to be added to the second resin, the PVB resin will find far wider applications. For example, PVB resin that has hardly been reused for practical uses can be reused effectively. Further, if reused PVB resin constitutes the PVB resin composition mixed with the first resin and this is added to the second resin, this will provide a resin molding with reduced brittleness and having good weatherability and strength compared with implementations where only the second resin constitutes the resin molding. Or, if reused PVB resin constitutes the PVB resin composition mixed with the first rubber composition and this is added to the second rubber composition, this will provide a rubber molding with reduced brittleness and having good weatherability, strength and crack resistance compared with implementation where only the second rubber composition constitutes the rubber molding.

The method of manufacturing a PVB resin composition of the present invention includes a first step in which a first resin or a first rubber composition and a PVB resin are mixed while being heated at a temperature lower than the melting point of the PVB resin or the melting point of the first resin or the softening point of the first rubber composition, and a second step in which the mixture resulting from the kneading is cooled. The first resin is made of at least one selected from the group consisting of a
polyolefin-based resin, a polystyrene-based resin, polyvinyl chloride, polyethylene terephthalate, vinyl acetate, polycarbonate, and acrylic resin, and a copolymer thereof.

According to the above method of manufacture, the PVB resin composition is produced by mixing the PVB resin and the first resin or first rubber composition and then cooling the mixture, thereby reducing the stickiness of the PVB resin of the PVB resin composition. This prevents pieces of the PVB resin composition obtained by this method of manufacture from sticking to each other and forming a clump, allowing the PVB resin composition to be easily mixed with another resin.

### EFFECTS OF THE INVENTION

In the PVB resin composition of the present invention, the first resin or first rubber composition is added to the PVB resin, reducing the stickiness of the PVB resin and thereby preventing pieces of the PVB resin composition from sticking to each other and forming a clump. Thus, it can be easily mixed with another resin.

Further, in the molding of the present invention, the PVB resin composition is added to the second resin or second rubber composition, thereby reducing brittleness and providing good weatherability, strength and other properties compared with implementations where only the second resin constitutes the resin molding or only the second rubber composition constitutes the rubber molding.

Further, the method of manufacturing a PVB resin composition of the present invention produces a PVB resin composition by mixing the PVB resin with the first resin or first rubber composition and then cooling the mixture, thereby providing a PVB resin with stickiness typical of PVB resin reduced. Thus, pieces of the PVB resin composition provided by this method of manufacture are prevented from sticking to each other and forming a clump, allowing the PVB resin composition to be easily mixed with another resin or another rubber composition.

### BRIEF DESCRIPTION OF THE DRAWINGS

[FIG. 1] FIG. 1 is a flow chart illustrating the process of manufacturing a PVB resin composition according to Embodiment 1.
[FIG. 2] FIG. 2 is a flow chart illustrating the process of manufacturing a resin molding.
[FIG. 3] FIG. 3 is a cross-sectional view of a glass laminate.
[FIG. 4] FIG. 4 is a schematic view of a manufacturing apparatus for the PVB resin composition of Embodiment 1.
[FIG. 5] FIG. 5 is a flow chart illustrating the process of manufacturing a PVB resin composition according to Embodiment 2.
[FIG. 6] FIG. 6 is a schematic view of a manufacturing apparatus for the PVB resin composition of Embodiment 2.
[FIG. 7] FIG. 7 is a perspective view of a second roller of the manufacturing apparatus for the PVB resin composition of Embodiment 2.
[FIG. 8] is a schematic view of a manufacturing apparatus for the PVB resin composition of Embodiment 4.
[FIG. 9] FIG. 9 is a flow chart illustrating the process of manufacturing the PVB resin composition according to Embodiment 4.
[FIG. 10] FIG. 10 illustrates a manufacturing apparatus that can be used for manufacture in Embodiment 4.
[FIG. 11] FIG. 11 shows a picture of the PVB resin composition of Embodiment 1.
[FIG. 12] FIG. 12 is a graph showing the results of tests for flexural properties.
[FIG. 13] FIG. 13 is a graph showing the results of tests for impact resistance.
[FIG. 14] FIG. 14 is a graph showing the results of tests for flexural properties.
[FIG. 15] FIG. 15 is a graph showing the results of tests for impact resistance.
[FIG. 16] FIG. 16 is a graph showing the results of tests for flexural properties.
[FIG. 17] FIG. 17 is a graph showing the results of tests for impact resistance.
[FIG. 18] FIG. 18 is a graph showing the results of tests for flexural properties.
[FIG. 19] FIG. 19 is a graph showing the results of tests for impact resistance.
[FIG. 20] FIG. 20 is a graph showing the results of tests for flexural properties.
[FIG. 21] FIG. 21 is a graph showing the results of tests for impact resistance.
[FIG. 22] FIG. 22 is a graph showing the results of tests for flexural properties.
[FIG. 23] FIG. 23 is a graph showing the results of tests for impact resistance.
[FIG. 24] FIG. 24 is a graph showing the results of tests for flexural properties.
[FIG. 25] FIG. 25 is a graph showing the results of tests for impact resistance.
[FIG. 26] FIG. 26 is a graph showing the results of tests for flexural properties.
[FIG. 27] FIG. 27 is a graph showing the results of tests for impact resistance.
[FIG. 28] FIG. 28 is a graph showing the relationship between the deflection of sample GM93 and bending load.
[FIG. 29] FIG. 29 is a graph showing the relationship between the deflection of sample GM92 and bending load.
[FIG. 30] FIG. 30 is a graph showing the relationship between the deflection of sample GM82 and bending load.
[FIG. 31] FIG. 31 is a graph showing the relationship between the deflection of sample GM89 and bending load.
[FIG. 32] FIG. 32 is a graph showing the results of tests for flexural properties.
[FIG. 33] FIG. 33 is a graph showing the results of tests for impact resistance.
[FIG. 34] FIG. 34 is a graph showing the results of tests for flexural properties.
[FIG. 35] FIG. 35 is a graph showing the results of tests for impact resistance.
[FIG. 36] FIG. 36 is a graph showing the results of tests for flexural properties.
[FIG. 37] FIG. 37 is a graph showing the results of tests for impact resistance.
[FIG. 38] FIG. 38 is a graph showing the results of tests for flexural properties.
[FIG. 39] FIG. 39 is a graph showing the results of tests for impact resistance.
[FIG. 40] FIG. 40 is a graph showing the results of tests for flexural properties.
[FIG. 41] FIG. 41 is a graph showing the results of tests for impact resistance.
[FIG. 42] FIG. 42 is a graph showing the relationship between the deflection of sample GM107 and bending load.
[FIG. 43] FIG. 43 is a graph showing the relationship between the deflection of sample GM108 and bending load.
[FIG. 44] FIG. 44 is a graph showing the relationship between the deflection of sample GM109 and bending load.
[FIG. 45] FIG. 45 is a graph showing the relationship between the deflection of sample GM243 and bending load.
[FIG. 46] FIG. 46 is a graph showing the relationship between the deflection of sample GM111 and bending load.
[FIG. 47] FIG. 47 is a graph showing the relationship between the deflection of sample GM110 and bending load.
[FIG. 48] FIG. 48 is a graph showing the results of tests for flexural properties.
[FIG. 49] FIG. 49 is a graph showing the results of tests for impact resistance.
[FIG. 50] FIG. 50 is a graph showing the results of tests for flexural properties.
[FIG. 51] FIG. 51 is a graph showing the results of tests for impact resistance.
[FIG. 52] FIG. 52 is a graph showing the results of tests for flexural properties.
[FIG. 53] FIG. 53 is a graph showing the results of tests for impact resistance.
[FIG. 54] FIG. 54 is a graph showing the relationship between the deflection of sample GM60 before being irradiated with ultraviolet rays, and bending load.
[FIG. 55] FIG. 55 is a graph showing the relationship between the deflection of sample GM60 after being irradiated with ultraviolet rays, and bending load.
[FIG. 56] FIG. 56 is a graph showing the relationship between the deflection of sample GM67 before being irradiated with ultraviolet rays, and bending load.
[FIG. 57] FIG. 57 is a graph showing the relationship between the deflection of sample GM67 after being irradiated with ultraviolet rays, and bending load.
[FIG. 58] FIG. 58 is a graph showing the relationship between the deflection of sample GM66 before being irradiated with ultraviolet rays, and bending load.
[FIG. 59] FIG. 59 is a graph showing the relationship between the deflection of sample GM66 after being irradiated with ultraviolet rays, and bending load.
[FIG. 60] FIG. 60 is a graph showing the relationship between the deflection of sample GM61 before being irradiated with ultraviolet rays, and bending load.
[FIG. 61] FIG. 61 is a graph showing the relationship between the deflection of sample GM61 after being irradiated with ultraviolet rays, and bending load.
[FIG. 62] FIG. 62 is a graph showing the relationship between the deflection of sample GM62 before being irradiated with ultraviolet rays, and bending load.
[FIG. 63] FIG. 63 is a graph showing the relationship between the deflection of sample GM62 after being irradiated with ultraviolet rays, and bending load.
[FIG. 64] FIG. 64 is a graph showing the relationship between the deflection of sample GM68 before being irradiated with ultraviolet rays, and bending load.
[FIG. 65] FIG. 65 is a graph showing the relationship between the deflection of sample GM68 after being irradiated with ultraviolet rays, and bending load.
[FIG. 66] FIG. 66 is a graph showing the relationship between the deflection of sample GM69 before being irradiated with ultraviolet rays, and bending load.
[FIG. 67] FIG. 67 is a graph showing the relationship between the deflection of sample GM69 after being irradiated with ultraviolet rays, and bending load.
[FIG. 68] FIG. 68 is a graph showing the results of tests for flexural properties.
[FIG. 69] FIG. 69 is a graph showing the results of tests for impact resistance.
[FIG. 70] FIG. 70 is a graph showing the relationship between the deflection of sample ABS before being irradiated with ultraviolet rays, and bending load.
[FIG. 71] FIG. 71 is a graph showing the relationship between the deflection of sample ABS after being irradiated with ultraviolet rays, and bending load.
[FIG. 72] FIG. 72 is a graph showing the relationship between the deflection of sample GM65 before being irradiated with ultraviolet rays, and bending load.
[FIG. 73] FIG. 73 is a graph showing the relationship between the deflection of sample GM65 after being irradiated with ultraviolet rays, and bending load.
[FIG. 74] FIG. 74 is a graph showing the results of tests for flexural properties.
[FIG. 75] FIG. 75 is a graph showing the results of tests for impact resistance.
[FIG. 76] FIG. 76 is a graph showing the results of tests for flexural properties.
[FIG. 77] FIG. 77 is a graph showing the results of tests for impact resistance.
[FIG. 78] FIG. 78 is a graph showing the results of tests for flexural properties.
[FIG. 79] FIG. 79 is a graph showing the results of tests for impact resistance.
[FIG. 80] FIG. 80 is a graph showing the relationship between the deflection of sample GM204 and bending load.
[FIG. 81] FIG. 81 is a graph showing the relationship between the deflection of sample GM155 and bending load.
[FIG. 82] FIG. 82 is a graph showing the relationship between the deflection of sample GM224 and bending load.
[FIG. 83] FIG. 83 is a graph showing the results of tests for flexural properties.
[FIG. 84] FIG. 84 is a graph showing the results of tests for impact resistance.
[FIG. 85] FIG. 85 is a graph showing the results of tests for flexural properties.
[FIG. 86] FIG. 86 is a graph showing the results of tests for impact resistance.
[FIG. 87] FIG. 87 is a graph showing the relationship between the deflection of sample GM226 and bending load.
[FIG. 88] FIG. 88 is a graph showing the relationship between the deflection of sample GM237 and bending load.
[FIG. 89] FIG. 89 is a graph showing the relationship between the deflection of sample GM238 and bending load.
[FIG. 90] FIG. 90 is a graph showing the relationship between the deflection of sample GM239 and bending load.
[FIG. 91] FIG. 91 is a graph showing the relationship between the deflection of sample GM245 and bending load.
[FIG. 92] FIG. 92 is a graph showing the relationship between the deflection of sample GM246 and bending load.
[FIG. 93] FIG. 93 is a graph showing the relationship between the deflection of sample GM247 and bending load.
[FIG. 94] FIG. 94 is a graph showing the results of tests for flexural properties.
[FIG. 95] FIG. 95 is a graph showing the results of tests for impact resistance.
[FIG. 96] FIG. 96 is a graph showing the relationship between the deflection of sample GM88 and bending load.

### EMBODIMENTS FOR CARRYING OUT THE INVENTION

Preferred embodiments of the present invention will be described in detail with reference to the drawings. For ease of explanation, the drawings referred to in the following description schematically show only those components of the embodiments of the present invention that are main ones necessary to describe the present invention. Accordingly, the present invention may include any component that is not shown in any of the drawings. Further, the sizes of the components in the drawings do not exactly represent the actual sizes or size ratios of the components.

### <Embodiment 1>

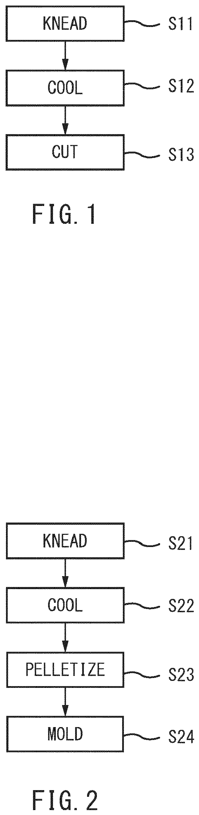

First, a first embodiment of the present invention will be described. FIG. 1 is a flow chart illustrating the process of manufacturing a PVB resin composition R1 starting from a PVB resin P. FIG. 2 is a flow chart illustrating the process of manufacturing a resin molding U.

In Embodiment 1, a PVB resin composition R1 is manufactured. The process of manufacturing a PVB resin composition R1 includes the step of preparing a PVB resin P and a first resin Q, the step of kneading the PVB resin P and first resin Q (step S11), the step of cooling the kneaded mixture (i.e. PVB resin composition R1) (step S12), and the step of cutting the cooled mixture (i.e. PVB resin composition R1) (step S13). Next, a PVB molding U is manufactured. The process of manufacturing a PVB molding U includes the step of kneading the obtained PVB resin composition R1 and a second resin S that has been separately prepared (step S21), the step of cooling the kneaded mixture (i.e. resin T) (step S22), the step of pelletizing the resin T (step S23), and the step of molding the resin T (step S24). These steps will be described in detail below.

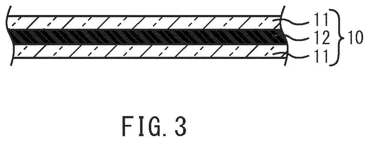

First, a PVB resin P is prepared. FIG. 3 is a cross-sectional view of a glass laminate 10. For example, the intermediate film 12 may be peeled off a glass laminate 10 that will be disposed of and used as a PVB resin film P, or, during manufacture of a glass laminate 10, portions of the intermediate film 12 that spread out of the glass plates 11 and are cut off may be collected and used as a PVB resin P. The glass laminate 10 includes two glass plates 11 sandwiching an intermediate film 12. The intermediate film 12 is made of a PVB resin film. The intermediate film 12 may have a double-layer structure, or a triple-layer structure having a functional film with sound-insulating performance or heat-insulating performance sandwiched between the other layers.

To separate the intermediate film 12 from the glass laminate 10 and collect it, a known method may be employed such as a dry method, wet method and a combination thereof.

Meanwhile, a first resin Q is prepared. The first resin Q is a plastic that is usually called plastic container-recycled material (hereinafter referred to as "PCRM"). PCRM is a resin mixture mainly composed of polyethylene (PE) or polypropylene (PP) discharged as wastes, and may include, in addition to PE or PP, polystyrene (PS), polyethylene terephthalate (PET), or polyvinyl chloride (PVC). The composition of the resin constituting the PCRM varies from a municipality to municipality, depending on the standards for the collection of plastic wastes. The PCRM may be constituted by a single resin or a plurality of resins. The PCRM may be plastic collected as industrial waste or plastic collected as domestic waste. The PCRM may contain materials other than plastic (for example, paper, fiber, glass, wood, dust, non-burnables, or foreign objects). This is because the components of PCRM depend on the method of collecting wastes by a municipality. The first resin Q may be PCRM pellets or may take other forms.

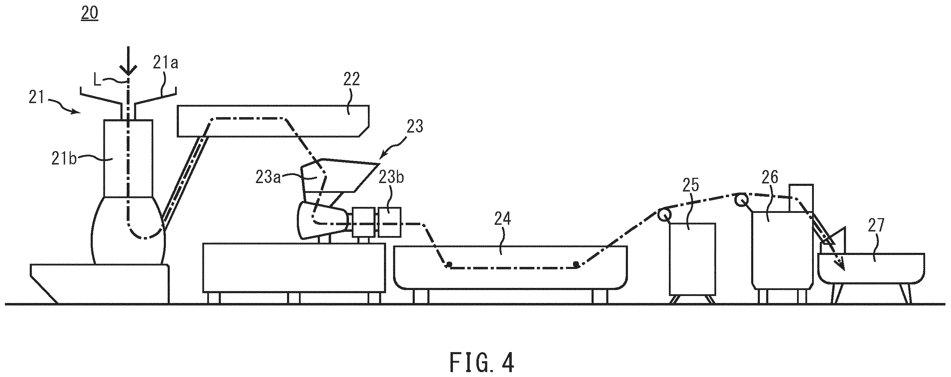

FIG. 4 is a schematic view of a manufacturing apparatus 20 that may be used to manufacture the PVB resin composition R1. This manufacturing apparatus 20 includes a kneader 21, a conveyor 22, an extruder 23, a water tank 24, an air knife 25, a pelletizer 26, and a pellet collector 27. The chain line L in FIG. 4 indicates the route of resin.

The kneader 21 includes a feed inlet 21a and a kneading chamber 21b. The PVB resin P and the first resin Q are fed into the kneader 21 through the feed inlet 21a and is kneaded together in the kneading chamber 21b. The kneading chamber 21b may have single-screw blades or twin-screw blades. The kneading chamber 21b includes a heater (not shown) that heats the interior of the chamber.

The conveyor 22 transports the resin kneaded in the kneading chamber 21b to the extruder 23.

The extruder 23 includes a kneading unit 23a and an extruding unit 23b. The kneading unit 23a includes a heater (not shown) that imparts heat sufficient for causing the resin that has been transported to become fluid. The extruding unit 23b includes a discharge outlet (not shown) for discharging the resin forwarded from the kneading unit 23a to outside the extruder 23. The discharge outlet includes a plurality of holes. Each of the holes has a diameter in the range of about 0.5 to 20 mm, for example. About eight to sixteen holes, for example, may be provided. The extruder 23 uses the kneading unit 23a to knead the resin that has been transported by the conveyor 22 and discharges the resin through the holes of the extruding unit 23b. The resin discharged by the extruder 23 has a cross-section matching the shape of the discharge outlet of the extruding unit 23b. That is, the discharged resin has the form of strings.

The water tank 24 cools the resin strings discharged by the extruder 23. As the resin advances through the water tank 24, the resin strings are cooled such that the resin solidifies. The temperature of the water supplied into the water tank 24 may be, for example, in the range of 15 to 25 °C. The water tank 24 may have a width of 30 to 100 cm, a length of 200 to 1000 cm, and a depth of 20 to 30 cm, for example. The water tank 24 preferably has a circulation system (not shown) that circulates water. As water in the water tank circulates, the flowing water better cools the resin, improving the efficiency with which the resin is cooled. It is preferable that the water tank 24 may be supplied with groundwater, because using groundwater for cooling resin minimizes water charges or the costs for regulating water temperature, for example.

The air knife 25 dries the resin strings that have been drawn out of the water tank. To further reduce the amount of water adhering to the pellets, a sponge or brush may be used together with the air knife 25 to remove water.

The pelletizer 26 cuts the resin strings dried by the air knife 25 to produce resin pellets.

The pellet collector 27 collects the resin pellets discharged by the pelletizer 26.

This manufacturing apparatus 20 is used to perform steps S11 to S13 shown in FIG. 1.

First, at step S11, a PVB resin P and a first resin Q are fed into the kneader 21 through the feed inlet 21a, and are kneaded. The PVB resin P may be fed by hand or by a machine. The PVB resin P that is fed may have the shape of pellets or may have the shape of intermediate films for glass laminates that have been collected as waste material (i.e. have a film shape), provided that they have a size and shape that allow them to be fed into the feed inlet. Preferably, the amount of the PVB resin P mixed is greater than that amount of the first resin Q. If the amount of the PVB resin P is greater than the amount of the first resin Q, even pieces of the PVB resin P sticking to each other due to its stickiness and forming a clump do not have be dispersed when they are to be mixed with the first resin Q. The weight ratio of the PVB resin P and first resin Q that are mixed may be, for example, 95:5 to 50:50. The kneading temperature may be, for example, in the range of 80 to 180 °C. This kneading temperature range is lower than the melting point of the PVB resin P (about 130 to 200 °C) or the melting point of the first resin Q. Preferably, the kneading temperature is lower than the melting point of the PVB resin P. If the kneading temperature is higher than the melting point of the PVB resin P, the PVB resin P may melt and degenerate.

The mixture of the PVB resin P and first resin Q resulting from the kneading at step S11 is transported by the conveyor 22 to the extruder 23. It is then fed into the extruder 23 through its feed inlet 23a and is made fluid to an appropriate degree before being discharged through the discharge outlet of the extruding unit 23b in the form of strings.

Subsequently, at step S12, the resin strings discharged by the extruder 23 are cooled in the water tank 24. The water tank 24 contains groundwater. The water tank 24 is provided with a circulation system that causes the groundwater to circulate in the water tank 24 such that the water temperature is always kept at a level sufficient for cooling resin. The water temperature in the water tank 24 may be 15 to 25 °C, for example. Thus, the resin mixture of the PVB resin P and first resin Q is cooled and solidifies to form strings of the PVB resin composition R1.

The resin drawn up from the water tank 24 is dried by the air knife 25.

Next, at step S13, the cooled PVB resin composition R1 strings are processed by the pelletizer 26, i.e. cut into pellets. The pelletizer 26 may be an apparatus such as a pelletizer or hot cut from Toshin Co., Ltd. Alternatively, resin strings may be cut by a cutter at a predetermined length (for example, 0.5 to 30 mm) into pellets without using the pelletizer 26. Thus, pellets of the PVB resin composition R1 are provided.

Lastly, the pellet collector 27 collects the PVB resin composition R1 pellets. Where necessary, the PVB resin composition pellets are sorted in accordance with standards for nonstandard defective products.

Thus, pellets of the PVB resin composition R1 are provided. The pellets of the PVB resin composition R1 thus provided contain the PVB resin P and, in addition, the first resin Q, thereby reducing the stickiness of the PVB resin P. Thus, pellets are prevented from sticking to each other forming a clump.

### (Method of Manufacturing Resin Molding)

Now, a method of manufacturing a resin molding U using the PVB resin composition R1 manufactured in the above manner will be described.

Separately from the manufacture of the PVB resin composition R1, a second resin S is prepared. The second resin S is of a type which a resin T forming the eventually obtained resin molding U is mainly composed of. More specifically, the second resin S is PCRM.

Next, at steps S21 to S23 shown in FIG. 2, pellets of the resin T containing the PVB resin composition R1 and second resin S are manufactured. The resin T pellets may be manufactured by a generally known manufacturing apparatus. For example, such pellets may be manufactured by the manufacturing apparatus 20 used for steps S11 to S13 discussed above. A method of manufacturing pellets of the resin T using an apparatus similar to the manufacturing apparatus 20 will be described below.

At step S21, the PVB resin composition R1 manufactured in the above manner and the second resin S are kneaded together. The kneaded PVB resin composition R1 is made of the PVB resin P and first resin Q, and thus does not have stickiness typical of PVB resin. Thus, pieces of the PVB resin composition R1 do not stick to each other and form a clump such that the PVB resin composition R1 may be fed into the kneading chamber of the manufacturing apparatus by a machine. This reduces the manufacturing costs compared with implementations where the resin is fed by hand.

Preferably, the content of the PVB resin composition R1 in the resin T is not smaller than the amount sufficient for causing the improvements in the strength of the resin T to appear sufficiently. Further, since an excessive content of the PVB resin composition R1 in the resin T may cause the resin T to be too soft, the content of the PVB resin composition R1 in the resin T is preferably not smaller than the amount that does not impair the moldability of the resin T. This value depends on the physical conditions of the resin T; for example, for a resin T to be used to make hangers, the content of the PVB resin composition R1 in the resin T is preferably not smaller than 5 weight %, and preferably smaller than 50 weight %. The proportion of the obtained resin T represented by the PVB resin P is the weight of the PVB resin P contained in the manufactured PVB resin composition R1 divided by the sum of the weights of the PVB resin composition R1 and second resin S, expressed in percentage.

Next, at step S22, the mixture of the PVB resin composition R1 and second resin S that has been kneaded is cooled by a cooling device. Then, at step S23, the resin T after cooling is processed by an extruder into strings that are then cut by a pelletizer into pellets. Thus, pellets of the resin T are provided.

Subsequently, the resin T pellets provided at step S23 are molded into a resin molding U in a desired shape at step S24. The resin molding U may be, for example, a housing for a home electric appliance or an electronics product, a construction resin plate, a protection member for a vehicle (for example, a bumper or an aero part), or a home resin product such as a hanger. The resin T may be molded by a generally known method. For example, resin T pellets may be molded by heating them so as to be liquid and pour them into a mold and then cool them.

Since the resin molding U resulting from the above steps contain the PVB resin composition R1, brittleness is reduced and better weatherability and strength are provided compared with implementations where only the second resin S is molded into a desired shape.

### <Variations of Embodiment 1>

In Embodiment 1, before the PVB resin P and PCRM Q are mixed, the PVB resin P and a radical initiator may be mixed such that the PVB resin experiences crosslinking reaction in advance. In such implementations, supposing the PVB resin P is in 100 parts by weight, the radical initiator in 0.01 to 0.7 parts by weight may be used. The radical initiator may be a compound generally known as an organic peroxide crosslinking agent, for example. As the PVB resin composition experiences crosslinking in advance, the bend elastic constant and impact resistance in a low-temperature environment are improved.

Preferably, in the step of mixing the PVB resin and PCRM, no radical initiator remains in the mixed material, because PP or PE that constitutes the PCRM may be deteriorated by the radical initiator, which means a decrease in impact resistance.

Further, in Embodiment 1, in addition to the PVB resin P and PCRM Q, a product with the name of "MARICOM (registered trade mark)" from Osaka Gas Chemicals Co., Ltd. may be contained as an additive. MARICOM is a compound developed as a modifier for polyethylene terephthalate (PET). Supposing the sum of the amounts of the PVB resin P and PCRM Q is 100 parts by weight, MARICOM may be contained in 2.5 to 7.5 parts by weight, for example. This improves the bending strength and impact resistance of the PVB resin composition.

Further, in Embodiment 1, in addition to the PVB resin P and PCRM Q, a rubber composition may be contained.

In the above description of Embodiment 1, the PVB resin P is a PVB resin film for the intermediate film 12 of a glass laminate 10; however, the present embodiment is not limited to such a material. For example, PVB resin pellets may be used as the PVB resin P. Since the amount of the first resin Q mixed in is smaller than that of the PVB resin P, it is not necessary to disperse the PVB resin P in the mixture, which would be necessary in implementation where the PVB resin is mixed with a large amount of resin. Thus, even when pieces of the PVB resin P stick to each other to form a clump, the first resin Q is dispersed and kneaded with the PVB resin P such that they are properly mixed together.

In the above description of Embodiment 1, the PVB resin composition R1 containing the PVB resin P and first resin Q is cut at step S13 to form pellets; however, the present embodiment is not limited to such a method. For example, strings of the PVB resin composition R1 may be crushed to form flakes. Alternatively, the PVB resin composition R1 strings need not be cut or crushed, and may be formed into wound wires.

In the above description of Embodiment 1, the second resin S and PVB resin composition R1 that are mixed together at step S21 are cooled at step S22 and then are pelletized at step S23 and molded again at step S24; alternatively, the resin T that is liquid directly after the mixing at step S21 may be poured into the mold for molding.

In the above description of Embodiment 1, the kneading chamber 21b of the kneader 21 of the manufacturing apparatus 20 includes blades that knead together the PVB resin P and first resin Q that have been fed in; however, the present embodiment is not limited to such a method. For example, the PVB resin P and first resin Q may be mixed together by causing the PVB resin P and first resin Q that have been fed into hit the inner wall of the kneading chamber and kneading them. Resin can be caused to hit the inner wall of the kneading chamber 21b for kneading by rotating the blades provided inside the kneading chamber 21b. In such implementations, the increase in the temperature at which the PVB resin P and first resin Q are kneaded together is smaller than in implementations where the blades are used to knead them together, thereby allowing the resin to be mixed together at a lower temperature.

### <Embodiment 2>

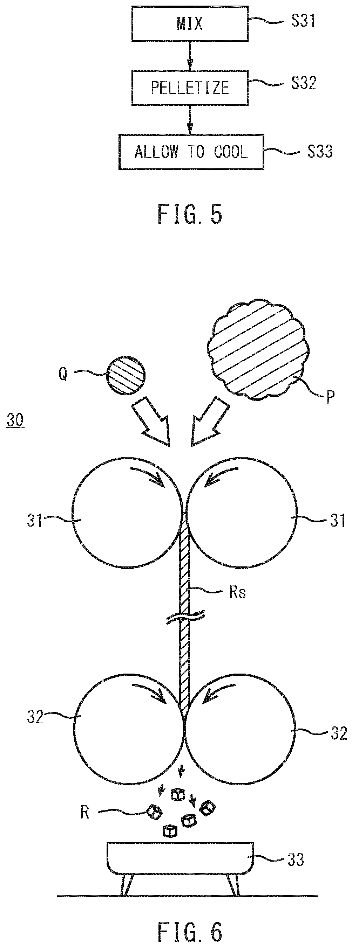

Now, a second embodiment of the present invention will be described. FIG. 5 is a flow chart illustrating the process of manufacturing a PVB resin composition R2 from a PVB resin.

Embodiment 2 is different from Embodiment 1 in terms of the process for manufacturing the PVB resin composition R2. The process for manufacturing the PVB resin composition R2 includes the step of preparing a PVB resin P and a first resin Q, the step of mixing the PVB resin P and first resin Q (step S31), the step of pelletizing the mixture (step S32), and the step of allowing the pelletized mixture to cool (step S33). The step of preparing a PVB resin P and first resin Q is the same as that of Embodiment 1 and thus will not be described again. Also, the step of manufacturing a resin molding U from the obtained PVB resin composition R2 is the same as that of Embodiment 1 and thus will not be described again.

FIG. 6 shows a manufacturing apparatus 30 for the PVB resin composition R2 that can be used for steps S31 to S33. The manufacturing apparatus 30 includes a pair of first rollers 31, a pair of second rollers 32 and a pellet collector 33.

The pair of first rollers 31 are positioned close to each other so as to roll in a plurality of materials including resin, press them together into a sheet and discharge it. A predetermined pressure is applied to the materials such as resin that have passed through the pair of first rollers 31. Further, the pair of first rollers 31 include a heater (not shown) so as to heat the materials such as resin that are passing through while a pressure is applied to them. The pair of first rollers 31 may be rollers generally known as open rollers or calendar rollers. The diameter of the first rollers 31 may be in the range of 300 to 1000 mm, for example. The width of the first rollers 31 may be in the range of 1000 to 3000 mm, for example. The pair of first rollers 31 are positioned with a distance of 0.1 to 10 mm. A plurality of pairs of first rollers 31 are preferably provided. If a plurality of pairs of first rollers 31 are provided, they are positioned such that resin discharged by one pair of first rollers 31 can be rolled in by another pair of first rollers 31. As resin passes through a plurality of pairs of first rollers 31, the resin can be mixed more uniformly.

A pair of second rollers 32 are positioned close to each other such that the two rollers 32 are in contact with each other or substantially in contact with each other. The pair of second rollers 32 roll in the resin that has been discharged by the pair(s) of first rollers 31, pelletize it and discharge the pellets. The diameter of the second rollers 32 may be in the range of 300 to 1000 mm, for example. The width of the second rollers 32 is not larger than that of the first rollers.

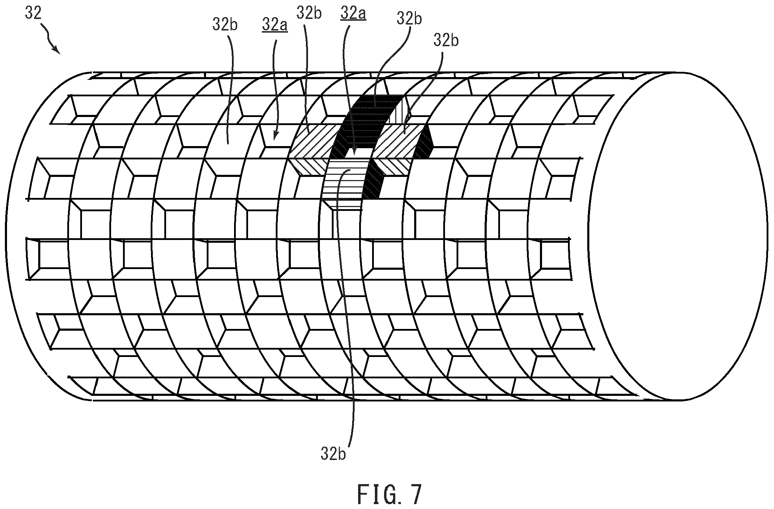

FIG. 7 is a perspective view of a second roller 32. To illustrate the structure of the periphery of the second roller 32, FIG. 7 shows the roller in size ratios that are different from the actual ones.

As shown in FIG. 7, the second roller 32 includes a plurality of recesses 32a on its periphery. Each of the recesses 32a is recessed relative to the peripheral surface so as to be rectangular and have a certain depth. That is, each of the recesses 32a generally has the shape of a rectangular parallelepiped. Each of the recesses 32a may have a vertical dimension of 3 to 10 mm, a horizontal dimension of 3 to 10 mm and a depth of 1 to 10 mm, for example. The recesses 32a are disposed so as to form a checkered pattern as a whole. Each of the recesses 32a is surrounded by non-recess portions 32b on the periphery of the roller, and thus these portions 32b are also disposed so as to form a checkered pattern as a whole. For convenience, FIG. 7 has shaded portions so as to make the shape of the recesses 32a easy to recognize.

Preferably, the two rollers constituting the pair of second rollers 32 have the same diameter and the same width. Further, the two rollers constituting the pair of second rollers 32 are designed such that the sizes of the checkered patterns of the recesses 32a on their peripheries are the same.

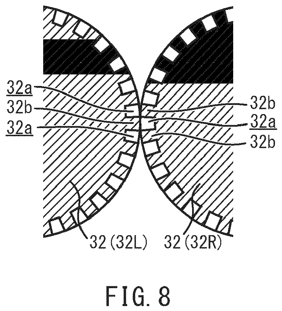

FIG. 8 shows a pair of second rollers 32 being in contact with each other. They are positioned relative to each other such that the portions 32b of the left roller 32L in FIG. 8 are aligned with the recesses 32a of the right roller 32R. Further, since the sizes of the checkered patterns of the recesses 32a on the peripheries of the two rollers are the same, all the portions 32b of the left roller 32L in FIG. 8 are aligned with all the recesses 32a of the right roller 32R. Similarly, all the recesses 32a of the left roller 32L in FIG. 8 are aligned with all the portions 32b of the right roller 32R.

The process of manufacturing the PVB resin composition R2 using the manufacturing apparatus 30 will be described below. At step S31, the PVB resin P and first resin Q are processed by the pair of first rollers 31 such that they are mixed together. If the manufacturing apparatus 30 includes a plurality of pairs of first rollers 31, the resin is processed by all the first rollers 31 such that the resin is thoroughly mixed. If the manufacturing apparatus 30 includes only one pair of first rollers 31, it is preferable that the resin discharged by the pair of first rollers 31 is fed into the first rollers 31 once again. Preferably, the peripheries of the pair of first rollers 31 are heated by a heater to a temperature in the range of 80 to 180 °C, for example, such that the PVB resin P and first resin Q are mixed together when they are appropriately soft. This provides a PVB resin composition sheet Rs. Further, as the PVB resin P and first resin Q are mixed by the pair of first rollers 31, the PVB resin P, which is a recycled material that can be in different shapes, has a uniform and stable sheet shape.

Subsequently, the PVB resin composition sheet Rs produced at step S31 is processed by the pair of second rollers 32 at step S32. At this moment, the PVB resin composition sheet Rs rolled in by the pair of second rollers 32 is pressed into the recesses 32a of the right roller 32R by the portions 32b of the left roller 32L in FIG. 8. When the pair of second rollers 32 slightly rotate starting from the state shown in FIG. 8, the recess 32a located directly above the portion 32b of the left roller 32L that is in contact with the right roller 32R in FIG. 8 comes in contact with the portion 32b located directly above the recess 32a of the right roller 32R that is in contact with the left roller 32L in FIG. 8 such that the PVB resin composition Rs is pushed by the portion 32b of the right roller 32R into the recess 32a of the left roller 32L.

When the pair of second rollers 32 rotate and the opening of a recess 32a faces downward, the portion of the PVB resin composition R2 pushed into this recess 32a is thrown out and drops. The resin portion thrown out has the shape consistent with that of the recess 32a, i.e. is a rectangular pellet.

Then, the resin pellets thrown out of the recesses 32a of the pair of second rollers 32 are allowed to cool in air and solidifies at step S33 while they advance from the pair of second rollers 32 to the pellet collector 33. This provides PVB resin composition R2 pellets.

The PVB resin composition R2 pellets thus provided may be mixed with the second resin S in the same manner as steps S21 to S23 of Embodiment 1 to provide a resin molding U in a desired shape.

### <Variations of Embodiment 2>

In the above description of Embodiment 2, the PVB resin composition R2 is manufactured using at least one pair of first rollers 31 and a pair of second rollers 32; however, the present embodiment is not limited to such a method. For example, after the PVB resin P and first resin Q are processed by the at least one pair of first rollers 31, the extruder 23, water tank 24, air knife 25 and pelletizer 26 of the manufacturing apparatus 20 of Embodiment 1 may be used to pelletize the resin discharged by the first rollers 32.

Further, in the above description of Embodiment 2, the PVB resin composition R2 pellets discharged by the second rollers 32 are allowed to cool in air; alternatively, they may be cooled using a cooling means. For example, if the temperature of the PVB resin composition R2 discharged by the second rollers 32 is high, a cooling means such as water tank may be used to minimize the increase in the size of the apparatus.

Further, in Embodiment 2, the PVB resin composition sheets Rs are pelletized; alternatively, the PVB resin composition R2 sheets discharged by the rollers may be cut to a required size to form PVB resin composition R2 sheets for use.

### <Embodiment 3>

Now, a third embodiment of the present invention will be described. The PVB resin composition R3 of Embodiment 3 is different from the compositions of Embodiments 1 and 2 in that the first resin Q is not a PCRM but acrylonitrile-butadiene-styrene (ABS) resin, which is a
polystyrene-based resin. Further, the resin T constituting the resin molding U of Embodiment 3 is different from the resins of Embodiments 1 and 2 in that the second resin S is not a PCRM but
acrylonitrile-butadiene-styrene (ABS) resin, which is a polystyrene-based resin. The PVB resin composition R3 of Embodiment 3 may be manufactured in the same manner as the method of manufacturing the PVB resin composition R3 of Embodiment 1 or 2. Further, the resin molding U of Embodiment 3 may be manufactured in the same manner as the method of manufacturing the resin molding U of Embodiment 1 or 2.

In the PVB resin composition R3 of Embodiment 3, the PVB resin P contains the first resin Q (ABS resin) such that in the obtained PVB resin composition R3, stickiness typical of the PVB resin P is reduced to prevent resin pieces from sticking to each other and forming a clump. Thus, during the manufacture of the resin T that is used to make the resin molding U, the PVB resin composition R3 may be properly mixed into the second resin S (ABS resin).

While the resin T that is used to make the resin molding U contains the PVB resin composition R3 added to the second resin S, both the first resin Q and second resin S contained in the PVB resin composition R3 are ABS resin. As such, even though the PVB resin composition R3 contains a resin other than the PVB resin P (i.e. first resin Q), this is of the same type as the resin which the resin molding U is to be mainly composed of (i.e. second resin S), and thus the properties of the resin molding U will not be affected.

Since the resin molding U is formed of the resin T containing the PVB resin composition R3 added to the second resin S, it has reduced brittleness and better weatherability and strength compared with a resin molding made by molding only the second resin S. Further, since the resin molding U is formed of the resin T containing the PVB resin composition R3 added to the second resin S, it has better oil resistance, heat resistance and light resistance, for example, than a resin molding made by molding only the second resin S. As such, the resin molding U where ABS resin is selected as the first resin Q and second resin S may be suitably used for applications such as resin constituting the body of tools for outdoor works, a housing for electric tools, imitation wood, construction parts, a housing part for portable terminals such as telephones, or a housing part for personal computers or electronic home appliances.

### <Variations of Embodiment 3>

In the above description of Embodiment 3, ABS resin is selected as the first resin Q and second resin S; alternatively, a resin other than ABS resin may be selected. For example, a polyolefin-based resin such as polyethylene or polypropylene, a polystyrene-based resin such as polystyrene, polyvinyl chloride, polyethylene terephthalate, vinyl acetate, a copolymer of vinyl acetate such as ethylene-vinyl acetate copolymer (EVA), polycarbonate, and acrylic resin may be selected as the first resin Q and second resin S. Further, a copolymer of one of these resins may be selected as the first resin Q and second resin S. For example, if polycarbonate is selected as the first resin Q and second resin S, it is suitable for applications such as a housing for personal computers, a housing for portable electronic devices, a housing for measurement instruments and a housing for home appliances.

In the above description of Embodiment 3, one resin is selected as the first resin Q and second resin S; however, the present embodiment is not limited to such an arrangement as long as the first resin Q does not adversely affect the resin T forming the resin molding U. For example, a PCRM may be selected as the first resin Q and ABS resin may be selected as the second resin S. Further, other combinations of resins selected as the first resin Q and second resin S may be used.

### <Embodiment 4>

Toughness is a property that indicates the strength of stickiness of a material and the physical property of being not easily bent or broken by an external force. The toughness is determined by the relationship between the value of flexural stress and the value of flexural modulus. More specifically, in a graph of stress-deflection curve, for example, the larger the area defined by the curve and the axis indicating deflection, the larger the determined toughness.

To increase the toughness of a resin against a bend, a fiber such as glass fiber may be added or a mineral such as talc or calcium carbonate may be added. This increases flexural strength, but decreases impact resistance. The impact resistance of a resin decreases presumably because separation occurs at a boundary between different materials (i.e. resin and additive). Thus, a resin composition that prevents boundary separation and that cannot easily break is needed.

To obtain a PVB resin composition having good toughness, the present inventors did extensive research and determined the present embodiment. The fourth embodiment of the present invention will be described below.

The PVB resin composition R4 of Embodiment 4 includes styrene acrylonitrile (SAN) resin as the first resin, PVB resin, a rubber composition (i.e. third rubber composition) and a radical initiator (i.e. crosslinking agent). The styrene acrylonitrile (SAN) resin is a polystyrene-based resin.

The PVB resin contained in the PVB resin composition R4 may be a virgin material, or may be a waste material such as intermediate films discharged during the process of manufacturing glasses for automobiles. The SAN resin contained in the PVB resin composition R4 may be a virgin material or a recycled material. Supposing the sum of the amounts of the PVB resin and SAN resin is 100 parts by weight, the PVB resin is contained in 3 to 30 parts by weight, for example, and preferably in 5 to 15 parts by weight.

The rubber composition may be, for example, a synthetic rubber such as nitrile rubber (NBR), styrene-butadiene rubber (SBR) and butadiene rubber (BR), or a natural rubber (NR). Supposing the sum of the amounts of the PVB resin and SAN resin is 100 parts by weight, the amount of the rubber composition is preferably 5 to 30 parts by weight, and more preferably 15 to 20 parts by weight.

The radical initiator is used to promote abstraction reaction of hydrogens from the resin components (i.e. activation of the resin) and crosslinking reaction of activated resin components. The radical initiator may be an organic radical initiator or inorganic radical initiator, where an organic radical initiator is typically used. The organic radical initiator may be an azo compound or organic peroxide, where an organic peroxide is preferred. Further, the organic peroxide may be, for example, dicumyl peroxide, di-tert-butyl peroxide, di-tert-butyl cumyl peroxide, 2,5-dimethyl-2,5-di (tert-butyl peroxy) hexane, 2,5-dimethyl-2,5-di (tert-butyl peroxide) hexine-3, tert-butyl cumyl peroxide, 1,3-bis (tert-butyl peroxy isopropyl) benzene, 3, 6,
9-triethyl-3,6,9-trimethyl-1,4,7-triperoxonane, 1,1-di (tert-hexyl peroxy) cyclohexane, 1,1-di(tert-hexyl peroxy)-3,3,5-trimethyl cyclohexane, 1,1-di(tert-butyl peroxy) cyclohexane, 2,2-di (tert-butyl peroxy) butane, 1,1-di(tert-butyl peroxy)-2-methyl cyclohexane, 2,5-dimethyl-2,5-di (tert-hexyl peroxy) hexane, di (2-tert-butyl peroxy isopropyl hexyl) benzene, di-tert-hexyl peroxide, 2,5-dimethyl-2,5-di (2-ethyl hexanoyl peroxy) hexane, 1,1,3,3-tetramethyl butyl peroxy-2-ethyl hexanoate, tert-hexyl peroxy-2-ethyl hexanoate, tert-butyl peroxy-2-ethyl hexanoate, tert-butyl peroxy laurate, tert-butyl peroxy-3,3,5-trimethyl hexanoate, tert-hexyl peroxy isopropyl monocarbonate, tert-butyl peroxy isopropyl monocarbonate, tert-hexyl peroxy-2-ethyl hexyl monocarbonate, 2,5-dimethyl-2,5-di (benzoyl peroxy) hexane, tert-butyl peroxy acetate, tert-hexyl peroxy benzoate, tert-butyl peroxy benzoate or the like. Among them, dicumyl peroxide is preferably used as it is suitable for use at high temperatures in the extruder and other machines. A single radical initiator may be used or two or more radical initiators may be used together.

Supposing the sum of the amounts of the PVB resin and SAN resin is 100 parts by weight, the amount of the radical initiator (i.e. crosslinking agent) is preferably 0.01 to 0.1 parts by weight, more preferably 0.02 to 0.06 parts by weight, and still more preferably 0.02 to 0.04 parts by weight.

Since the PVB resin composition R4 contains a rubber composition, the PVB resin composition R4 is elastic, providing good impact resistance. Further, since the PVB resin composition R4 contains a radical initiator, hydrogens are extracted from the rubber composition and PVB resin such that radical reaction occurs, and thus they are chemically bonded. Thus, in the PVB resin composition R4, separation cannot easily occur at a boundary between the rubber composition and PVB resin and cannot easily break even when receiving an impact. That is, the PVB resin composition R4 of the present embodiment provides good toughness.

The PVB resin composition R4 of the present embodiment has good flexural properties, impact resistance and toughness, and thus can be used as a substitute material for general-purpose resins such as polypropylene (PP) or ABS resin. The PVB resin composition R4 of the present embodiment contains SAN resin and PVB resin as its base material, and, since SAN resin is inexpensive and PVB resin may be waste intermediate films for glasses for automobiles or construction glasses, it can have properties that match those of PP or ABS resin at low cost.

Experiments have shown that the PVB resin composition R4 of the present embodiment has good weatherability. Since the PVB resin composition R4 of the present embodiment has good weatherability, it is suitably used to make products used outdoors (for example, imitation wood, horticultural materials, outdoor-installed containers or pallets, roof materials, gutters, sign parts, or the like).

Further, the PVB resin composition of the present embodiment achieves good toughness without using foreign materials such as glass fiber, talc or calcium carbonate to provide good toughness, and thus, after the molding of the resin is used, it can be again crushed or processed in other manners for recycling.

### (Manufacture Method of Embodiment 4)

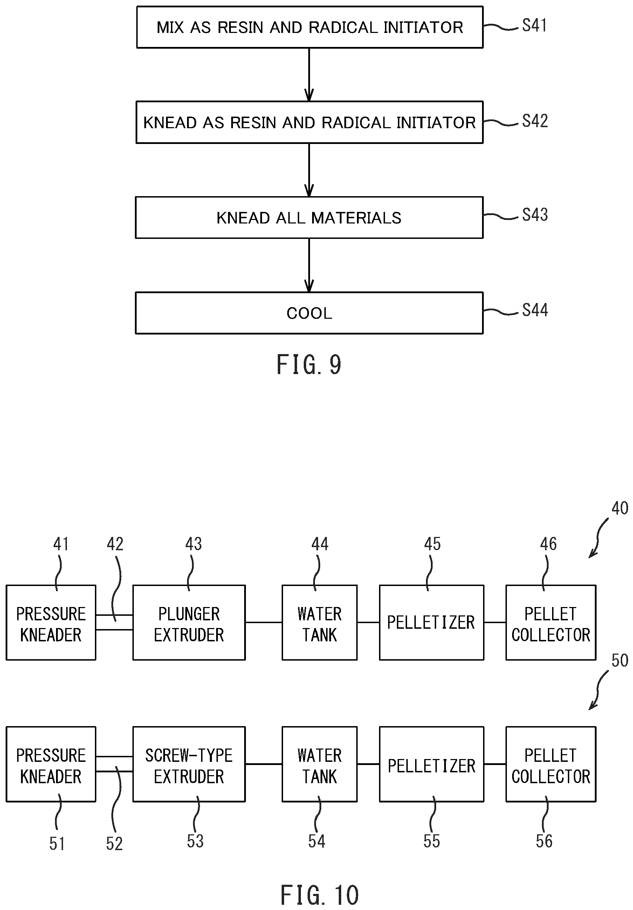

The method of manufacturing the PVB resin composition R4 will be described. FIG. 9 is a flow chart illustrating the process of manufacturing the PVB resin composition R4. FIG. 10 shows schematics of the manufacturing apparatus 40 and manufacturing apparatus 50 used to manufacture the PVB resin composition R4. The manufacturing apparatus 40 includes a pressure kneader 41, a conveyor 42, a plunger extruder 43, a water tank 44, a pelletizer 45 and a pellet collector 46. The manufacturing apparatus 50 includes a pressure kneader 51, a conveyor 52, a screw-type extruder 53, a water tank 54, a pelletizer 55 and a pellet collector 56.

In the present embodiment, the manufacturing apparatus 40 is used to knead some of the SAN resin, the PVB resin, the radical initiator and rubber composition and pelletize the mixture.

The pressure kneader 41 kneads the materials fed through the feed inlet. The pressure kneader 41 is a small kneader with a kneading chamber with a capacity of about 1 to 7 liters. The pressure kneader 41 is capable of kneading a material while applying a pressure of about 0.15 to 0.20 MPa (1.5 to 2.0 kg/cm²), for example. As the material is kneaded while a pressure is applied thereto, the radical initiator can be uniformly dispersed in the resin. The material that has been kneaded by the pressure kneader 41 passes through the conveyor 42 and is transported to the plunger extruder 43.

Alternatively, the materials may be kneaded without using the pressure kneader 41. A method that does not use the pressure kneader 41 involves, for example, breaking, by hand, material to be fed into small pieces with a side of about 5 mm or crushing it, and feeding the material into a small twin-screw extruder to knead it. In such implementations, the twin-screw extruder includes a temperature control mechanism. However, if a large amount of material is to be processed, the pressure kneader 41 is preferably used.

The plunger extruder 43 hydraulically pushes the material that has been kneaded by the pressure kneader 41 and discharges it through the dice. A plurality of holes are formed on the discharge outlet of the plunger extruder 43 such that the discharged resin has the shape of strings (or strands).

Similar to the water tank 24 described in connection with Embodiment 1, the water tank 44 cools the resin strings discharged at the previous step. Although not shown in FIG. 10, an air knife may be provided after the water tank 44 for expelling water adhering to the resin.

The pelletizer 45 cuts the resin strings cooled in the water tank 44 to make resin pellets. The pelletizer 45 cuts the resin strings to the size of 0.2 to 5 mm, for example. As the pellets have a thickness smaller than the typical thickness of commercially available pellets, the manufacturing apparatus 50 can easily disperse the radical initiator uniformly in the SAN resin.

The pellet collector 46 collects the resin pellets discharged by the pelletizer 45.

The water tank 44 and pelletizer 45 are not essential to the manufacturing apparatus 40. For example, if an extruder including a pelletizer at its discharge outlet is employed, the water tank 44 and pelletizer 45 may be omitted. In such implementations, the pelletized material may be cooled by a vibratory feeder, for example, or may be allowed to cool in air.

The manufacturing apparatus 50 of FIG. 10 has the same construction as the manufacturing apparatus 40 except for the pressure kneader 51 and screw-type extruder 53. In the present embodiment, the manufacturing apparatus 50 is used to knead the pellets provided by the manufacturing apparatus 40 and the rest of the SAN resin that was not used in the manufacturing apparatus 40 and pelletize them.

The pressure kneader 51 kneads the materials fed through the feed inlet. The pressure kneader 41 is a small kneader with a kneading chamber with a capacity of about 1 to 7 liters. The pressure kneader 41 is capable of kneading a material while applying a pressure of about 0.15 to 0.20 MPa (1.5 to 2.0 kg/cm²), for example. The pressure kneader 51 is a large kneader with a kneading chamber with a capacity of about 35 to 120 liters.

The screw-type extruder 53 may be a single-screw one or a twin-screw one; to increase reaction efficiency, a twin-screw extruder is preferable. Since a plurality of holes are formed on the discharge outlet of the screw-type extruder 53, the discharged resin has the shape of strings (or strands).

The kneader may be, instead of the screw-type extruder 53, a Banbury mixer or a co-kneader, for example. To induce a chemical bond by reactive processing (reaction extrusion) techniques, a pressure kneader or a multi-screw extruder is preferably used, and more preferably, a twin-screw extruder is used.

The materials may be kneaded without using the pressure kneader 51. A method that does not use the pressure kneader 51 involves, for example, kneading the materials using a kneader extruder, a feeder extruder or a large multi-screw extruder, for example. However, if a large amount of material is to be processed, the pressure kneader 51 is preferably used.

The method of manufacturing the PVB resin composition R4 using the manufacturing apparatus 40 and manufacturing apparatus 50 described above will be described below. As shown in FIG. 9, the method of manufacturing the PVB resin composition R4 includes: step S41, in which some of the SAN resin and the radical initiator are mixed; step S42, in which this SAN resin and the radical initiator are kneaded; step S43, in which all the materials are kneaded; and step S44, in which the kneaded materials are cooled.

First, at step S41, some of the SAN resin is crushed into powder. Some of the SAN resin means, for example, an amount of about 5 to 50 volume % of the capacity of the kneader 41 of the manufacturing apparatus 40. Then, this SAN resin powder and the radical initiator are mixed uniformly.

Next, at step S42, the mixture of the SAN resin powder and radical initiator, and PVB resin and rubber composition are fed into the pressure kneader 41 of the manufacturing apparatus 40 and kneaded. The conditions for the kneading step vary depending on whether a radical initiator is to be used to cause crosslinking reaction or the material is to be kept uncrosslinked. If a radical initiator is to be used to cause crosslinking reaction, kneading is done for about 15 minutes at a temperature of up to about 190 °C, for example. At this moment, reactive processing reaction (RP reaction) causes crosslinking reaction to proceed at the same time as the kneading such that a crosslinked structure is formed between the rubber composition and PVB resin. If a radical initiator is not to be used to cause crosslinking reaction (i.e. the material is to be kept uncrosslinked), kneading is doen for about 15 minutes at a temperature of about 145 °C, for example.

The material that has been fed passes through the pressure kneader 41, conveyor 42, plunger extruder 43, water tank 44 and pelletizer 45 of the manufacturing apparatus 40, and the resulting resin pellets are collected by the pellet collector 46. The collected pellets have a thickness of 0.2 to 5 mm, for example.

Subsequently, at step S43, the pellets provided at step S42, and the rest of the SAN resin, the PVB resin and rubber composition are fed into the pressure kneader 51 of the manufacturing apparatus 50 and are kneaded. The kneading temperature at this step is in the range of 150 to 190 °C, for example. The kneading time is in the range of 15 to 30 minutes. The material that has been kneaded by the pressure kneader 51 is transported by the conveyor 52 to the screw-type extruder 53.

Next, at step S54, the mixture discharged by the screw-type extruder 53 is cooled in the water tank 54. Then, following the processing by the pelletizer 55, the PVB resin composition R4 pellets are collected by the pellet collector 56.

The water tank 54 and pelletizer 55 are not essential components of the manufacturing apparatus 50. If the manufacturing apparatus 55 does not include the water tank 54, the pelletized material can be cooled as it is cooled by a vibratory feeder or is allowed to cool in air, for example. If the manufacturing apparatus 55 does not include the pelletizer 55, an extruder including a pelletizer at its discharge outlet may be provided, for example, to hot-cut the resin.

### <Variations of Embodiment 4>

In the above description of the present embodiment, the PVB resin composition R4 contains a radical initiator (i.e. crosslinking agent); however, the radical initiator is not an essential component of the present invention, and the PVB resin composition may be made of SAN resin, PVB resin and rubber composition, and other additives where necessary. Still, to provide good impact resistance, a radical initiator is preferably added to the PVB resin composition, because adding a radical initiator causes the rubber composition and PVB resin to be chemically bonded by radical reaction, increasing their affinity.

In the above description of the present embodiment, the PVB resin composition R4 contains a rubber composition; however, the rubber composition is not an essential component of the present invention. The PVB resin composition of the present invention may be made of SAN resin, PVB resin and a radical initiator, and other additives where necessary. Further, the PVB resin composition of the present invention may be made of SAN resin and PVB resin, and other additives where necessary. Still, to provide good mechanical properties, a rubber composition is preferably added to the PVB resin composition. As a rubber composition is added, the PVB resin composition contains an elastic structure, thereby improving flexural properties or impact resistance.

In the above description, the PVB resin composition R4 formed in the present embodiment is molded and, for example, suitably used to make freezer palettes; however, the PVB resin composition R4 may be used as a modifier for other resins. In such implementations, the proportion of the base material (i.e. the total amount of SAN resin and PVB resin) of the PVB resin composition R4 represented by the PVB resin is preferably increased. If the PVB resin composition is used as a modifier for other resins, examples of other resins include SAN resin, PCRM, polystyrene resin, and acrylic resin. Thus, the other resins obtain good flexural properties, impact resistance and toughness.

### <Other Embodiments>

In the above description of Embodiments 1 to 4, the PVB resin P and the first resin Q are mixed to provide the PVB resin composition R; alternatively, the PVB resin P and a rubber composition may be mixed to produce a PVB resin composition. In such implementations, as the PVB resin composition made by mixing the PVB resin P and rubber composition is added to the second rubber composition, a rubber composition is provided having reduced brittleness and good weatherability, strength and crack resistance.

In the above description of Embodiments 1 to 4, the PVB resin composition R is mixed with the second resin S; alternatively, the PVB resin composition may be crushed to provide resin abrasive to be used for polishing purposes.

The above embodiments are merely examples that can be used for carrying out the present invention. Thus, the present invention is not limited to the above embodiments, and the above embodiments may be modified where appropriate without departing from the spirit of the invention, and carried out.

### EXAMPLES

### [1: Production of PVB Resin Composition]

In accordance with the method of manufacturing the PVB resin composition of Embodiment 1, a PVB resin composition R containing the PVB resin P and the first resin (PCRM) Q was manufactured. The weight ratio of the PVB resin P and first resin Q was 80:20. The PVB resin composition thus manufactured will be referred to as Example 1.

The pellets of the PVB resin composition R that have been provided did not stick to each other and form a clump.

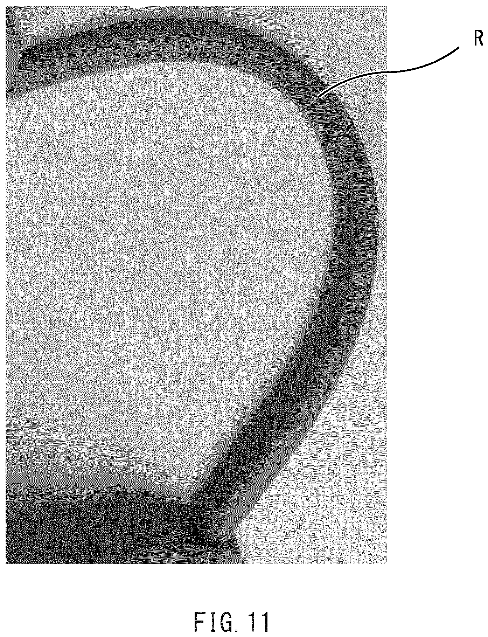

FIG. 11 shows a picture of a string of the PVB resin composition R before being pelletized. The PVB resin composition R string had a greater elasticity than the simple PVB resin P. Further, no crack or the like developed when an external force was applied to the PVB resin composition R to bend it, as shown in the picture. It is known that a resin product formed only from a conventional PCRM can easily develop a crack or damage when it is dropped or an external force applies an impact to it. Consequently, it can be understood that mixing the PVB resin P and PCRM Q provided good strength.

### [2: Evaluation of SAN Resin Containing PVB Resin]

Acrylonitrile resin (or SAN resin) is a hard, general-purpose resin, and has good mechanical properties such as tensile performance. However, since SAN resin is hard, it has low impact resistance. In view of this, the inventors attempted to use PVB resin to modify SAN resin to make a resin with high toughness. That is, they attempted to modify SAN resin to make a resin that has improved impact resistance and cannot easily break (i.e. has good toughness), while minimizing the decrease in the flexural strength of SAN resin.

Samples GM1, GM2 and GM3 containing SAN resin and PVB resin mixed together were produced. As shown in Table 1, samples GM1, GM2 and GM3 had different proportions of PVB resin. Then, their flexural properties (i.e. flexural modulus, maximum flexural stress and deflection corresponding to maximum flexural stress) and impact resistance (i.e. Izod impact value) were measured. As a comparative example, sample SAN0 having 100 % SAN resin was prepared and its flexural properties (i.e. flexural modulus, maximum flexural stress and deflection corresponding to maximum flexural stress) and impact resistance (i.e. Izod impact value) were measured. The method of producing the samples and the method of measuring the samples will be described below.

The SAN resin used was a recycled resin (pellet-shaped) discharged by Komorijushi Co., Ltd. (in the following tables, this SAN resin is referred to as "SAN(I)"). SAN(I) is a recycled material of SAN resin made in Japan. The PVB resin used was a PVB sheet that is used as intermediate films for automobile glasses from Sekisui Chemical Co., Ltd. (in the following tables, this PVB resin is referred to as "standard PVB"). This PVB sheet is a residual edge material from production of automobile glasses.

**[Table 1]**

| | Sample | Base material (parts by weight) | | Flexural modulus (MPa) | Maximum flexural stress (MPa) | Deflection corresponding to maximum stress (mm) | Izod impact value (kJ/m²) |
|---|---|---|---|---|---|---|---|
| | | SAN | PVB | | | | |
| | | SAN(I) (recycled) | Standard PVB | | | | |
| Comparative ex. | SAN0 | 100 | 0 | 3682.41 | 135.59 | 4.77 | 2.22 |
| Inventive ex. | GM1 | 95 | 5 | 3467.28 | 121.36 | 4.26 | 1.90 |
| | GM2 | 90 | 10 | 3324.75 | 113.69 | 4.05 | 2.00 |
| | GM3 | 85 | 15 | 13360.31 | 110.39 | 3.88 | 3.39 |

### (Method of Producing Samples)

A method of producing samples will be described. If a material was not contained in a sample, the method described below was employed where the step corresponding to that material was omitted. The samples were kneaded without using the pressure kneader, except GM94P and GM95P.

To prepare the materials, SAN resin pellets were crushed by a mill into powder. A PVB resin and rubber composition were cut to make particles with a diameter of not greater than 5 mm. A radical initiator was mixed with the SAN resin powder.

A twin-screw extruder was used to knead the materials processed in the above manner. The extruder used was a twin-screw extruder from Technovel Corporation ("KZW15-45HG" (ϕ=15, L/D=45)). The following operating conditions of the apparatus were set: the screw revolution speed was 250 rpm, the temperature of specimens was about 180 °C and the feeder discharge was 15 g per minute.

These materials were heated in the twin-screw extruder to cause crosslinking/mixing. The resin mixture extruded by the dice of the extruder that had the shape of strands was cooled in the water tank and pelletized by the pelletizer. Then, these pellets were put into a bag and shaken to mix them together to provide a uniform quality.

Next, an injection molding machine used the above pellets to make general-purpose specimens in accordance with JIS K7139 (80 mm×10 mm×4 mm). The injection molding machine used was "ES1000" from Nissei Plastic Industrial Co., Ltd. The following operational conditions of the machine were set: the cylinder temperature was 180 °C and was constant, the injection speed was a predetermined speed in the range of 10 to 40 mm/s, the hold pressure was a predetermined pressure in the range of 25 to 40 MPa, the hold time was 15 seconds, the mold temperature was 45 °C, and the cooling time was 15 to 40 seconds.

The other samples discussed below (except samples GM94P and GM95P) were made in the same manner as samples GM1 to GM3.

### (Method of Measuring Flexural Properties (Flexural Modulus, Maximum Flexural Stress and Deflection Corresponding to Maximum Flexural Stress))

The general-purpose specimens that had been made were used to conduct bending tests (i.e. three-point bending tests) using a "5966-type Versatile Material Tester" from Instron Japan Company Ltd. at a temperature of 20 °C and in an atmosphere with a humidity of 65 %. The support span was 50 mm, the bending speed was 5.0 mm/m, and the amount of deformation was 20 mm.

### (Method of Measuring Impact Resistance (Izod Impact Value))

In the general-purpose specimens that had been made, a 2 mm notch was made using a "No. 189 PNCA Notching Machine from Yasuda Seiki Seisakusho Ltd. Thereafter, a "No. 258-L-PC Impact Tester" from Yasuda Seiki Seisakusho Ltd. was used to conduct Izod impact tests at room temperature. The load of the hammer was 5.5 J.

The flexural properties and impact resistance of the other samples discussed below were measured in the same manner as samples GM1 to GM3.

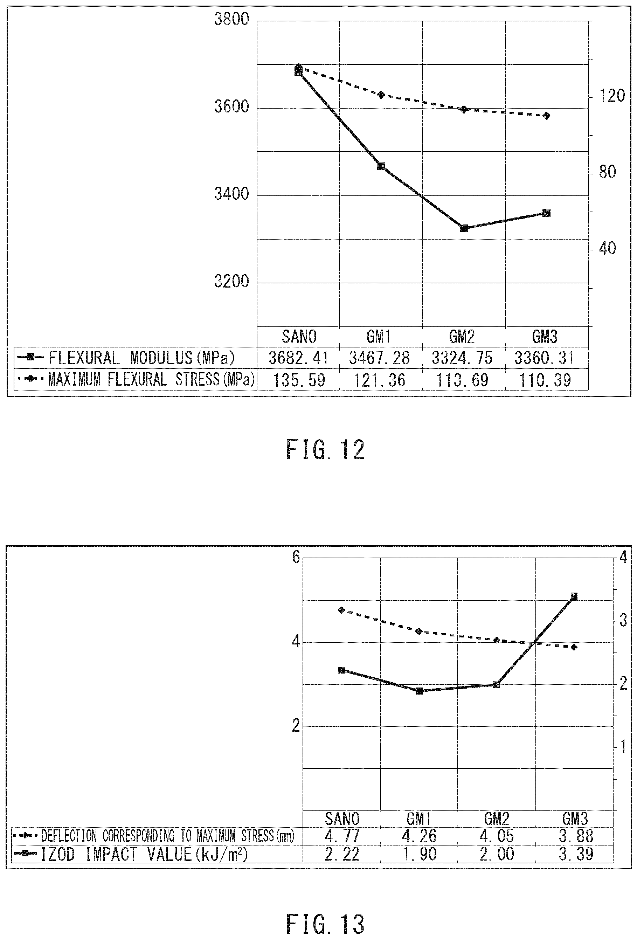

The measurements from the above measuring method are shown in Table 1 and FIGS. 12 and 13.

As can be understood from FIG. 12, the flexural properties decreased as PVB resin was added to SAN resin. However, as can be understood from FIG. 13, when the amount of PVB resin added was increased to 15 parts by weight (GM3), the impact value improved over sample SAN0 with 100 % SAN resin by a factor of about 1.5. Further, as can be understood from FIG. 12, a comparison of GM2 with an amount of PVB resin of 10 parts by weight and GM3 with 15 parts by weight shows an improvement in flexural properties. This shows that, if SAN resin and PVB resin are to be mixed, a preferred amount of PVB resin added is about 15 parts by mass.

### [3: Evaluation of SAN Resin Containing Rubber Composition]

From the above samples GM1 to 3 with SAN resin and PVB resin mixed together, it cannot be said that the flexural properties improved. In view of this, to increase the toughness of a resulting resin, implementations where a rubber composition was added in addition to SAN resin and PVB resin were investigated.

To increase the impact resistance of SAN resin, samples GM64, GM74 and GM42 were made, which were resin compositions with a rubber composition added to SAN resin. The details of the compositions are shown in Table 2. Since GM64 contains no PVB resin, it is a comparative example in the context of the present invention. As another comparative sample, sample GM63 with 100 % SAN resin was prepared. Then, their flexural modulus, maximum flexural stress and deflection corresponding to maximum flexural stress, as well as impact resistance (i.e. izod impact value) were measured.

The SAN resin used was a recycled resin (pellet-shaped) discharged by Komorijushi Co., Ltd. (in the following tables, this SAN resin is referred to as "SAN(II)"). SAN(II) is a recycled material of SAN resin made in Japan. The NBR used was a standard-grade NBR from Zeon Corporation (under the product name of "Nipol DN3350") (in the tables below, this NBR is referred to as "Standard NBR"). The radical initiator used was dicumyl peroxide from NOF Corporation (under the product name of "Percumyl D").

**[Table 2]**

| | Sample | Base material (parts by weight) | | Additive (parts by weight) | | Flexural modulus (MPa) | Maximum flexural stress (MPa) | Deflection corresponding to maximum stress (mm) | Izod impact value (kJ/m²) |
|---|---|---|---|---|---|---|---|---|---|
| | | SAN | PVB | Rubber | Radical initiator | | | | |
| | | SAN(II) (recycled) | Standard PVB | Standard NBR | Percumyl D | | | | |
| Comparative ex. | GM63 | 100 | 0 | 0 | 0 | 3474.70 | 127.07 | 4.62 | 1.87 |
| | GM64 | 100 | 0 | 11 | 0 | 3080.73 | 113.08 | 5.53 | 4.41 |
| Invective ex. | GM74 | 85 | 15 | 10 | 0 | 2829.56 | 83.16 | 6.07 | 5.02 |
| | GM42 | 85 | 15 | 10 | 0.02 | 2784.30 | 78.28 | 5.62 | 5.01 |

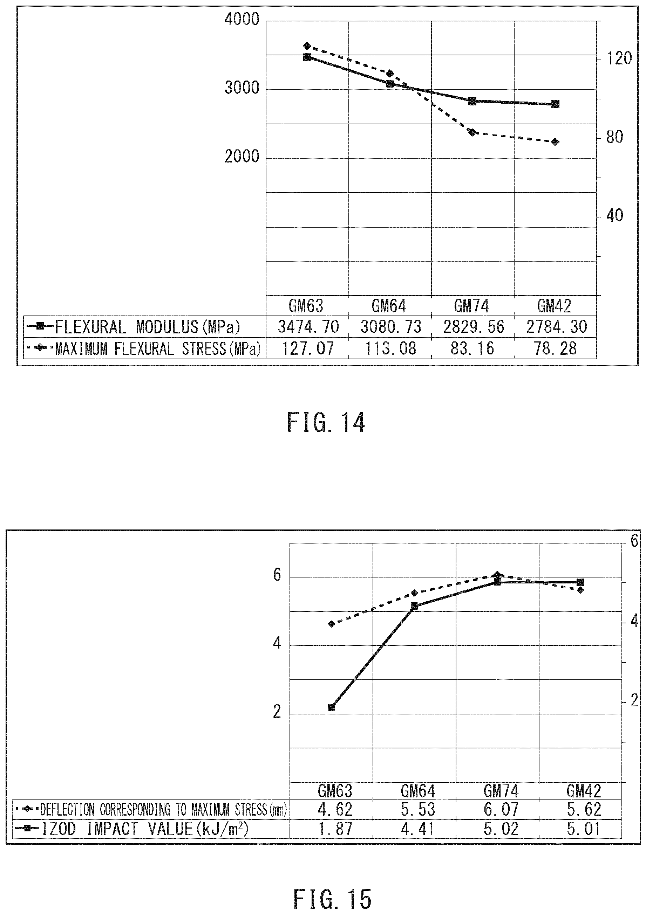

The measurements from the above measuring method are shown in Table 2 and FIGS. 14 and 15.

As can be understood from FIG. 14, in sample GM74 which contains NBR and sample GM42 which contains NBR and a crosslinking agent, the flexural properties decreased compared with simple SAN resin (GM63), however, good values for practical applications were obtained. On the other hand, as can be understood from FIG. 15, in samples GM74 and GM42, more than double impact values were obtained compared with simple SAN resin.

In the bending tests, all the sample pieces of SAN resin alone (GM63) broke. On the other hand, in samples GM74 and GM42 containing NBR and PVB resin, no sample piece broke, regardless of whether a crosslinking agent was contained or not. This shows that the toughness of the resin composition improves as the PVB resin composition contains NBR.

### [4. Considerations about Crosslinking Agent]

Different types of crosslinking agent (peroxidative agent) added to SAN resin and different amounts were used to make samples GM72, GM67, GM68, GM69, GM73, GM60, GM61 and GM62. The details of the compositions are shown in table 3. Then, their flexural properties (i.e. flexural modulus, maximum flexural stress and deflection corresponding to maximum flexural stress) and impact resistance (i.e. Izod impact value) were measured.

The radical initiators used were Percumyl D, mentioned above, and 2,5-dimethyl-2,5-di (tert-butyl peroxy) hexane from Kayaku Akzo Corporation (under the product name of "Kayahexa AD").

**[Table 3]**

| | Sample | Base material (parts by weight) | | Additive (parts by weight) | | | Flexural modulus (MPa) | Maximum flexural stress (MPa) | Deflection corresponding to maximum stress (mm) | Izod impact value (kJ/m²) |
|---|---|---|---|---|---|---|---|---|---|---|
| | | SAN | PVB | Rubber | Radical initiator | | | | | |
| | | SAN(II) (recycled) | Standard PVB | Standard NBR | Percumyl D | Kayahexa AD | | | | |
| Comparative ex. | SAN100% | 100 | 0 | 0 | - | - | 3474.70 | 127.07 | 4.62 | 1.87 |
| Inventive ex. | GM72 | 85 | 15 | 20 | 0.02 | | 2333.65 | 63.36 | 3.99 | 8.07 |
| | GM67 | 85 | 15 | 20 | 0.04 | | 2365.42 | 62.45 | 3.80 | 8.96 |
| | GM68 | 85 | 15 | 20 | 0.06 | | 2480.89 | 66.21 | 3.85 | 8.48 |
| | GM69 | 85 | 15 | 20 | 0.10 | | 2413.85 | 63.21 | 4.88 | 7.98 |
| | GM73 | 85 | 15 | 20 | | 0.02 | 2344.61 | 63.89 | 4.00 | 7.64 |
| | GM60 | 85 | 15 | 20 | | 0.04 | 2386.29 | 62.74 | 3.85 | 8.31 |
| | GM61 | 85 | 15 | 20 | | 0.06 | 2394.53 | 62.82 | 3.82 | 8.09 |
| | GM62 | 85 | 15 | 20 | | 0.10 | 2331.06 | 59.80 | 4.63 | 6.95 |

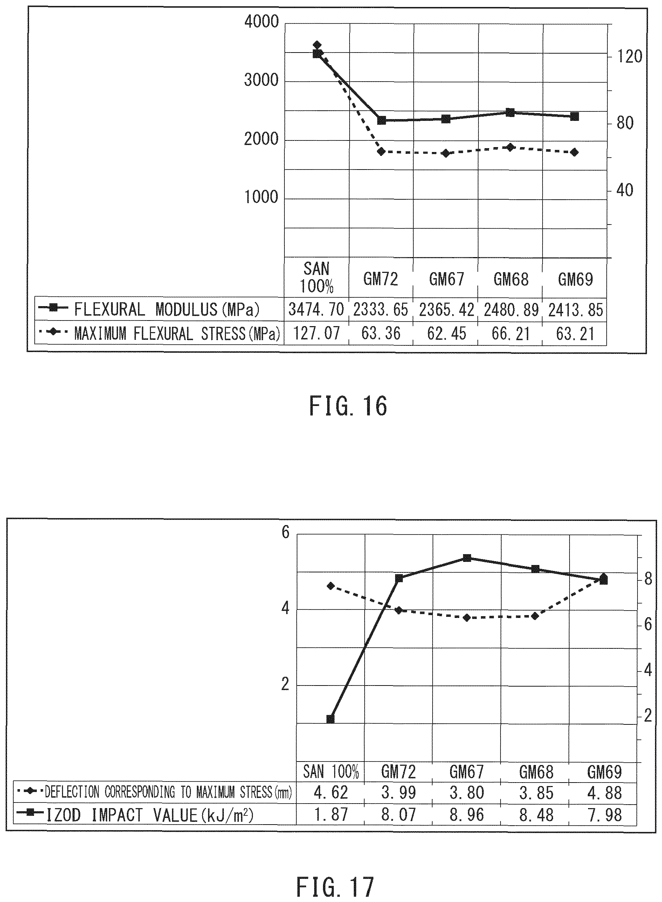

The measurements from the above measuring method are shown in Table 3 and FIGS. 16 to 19.

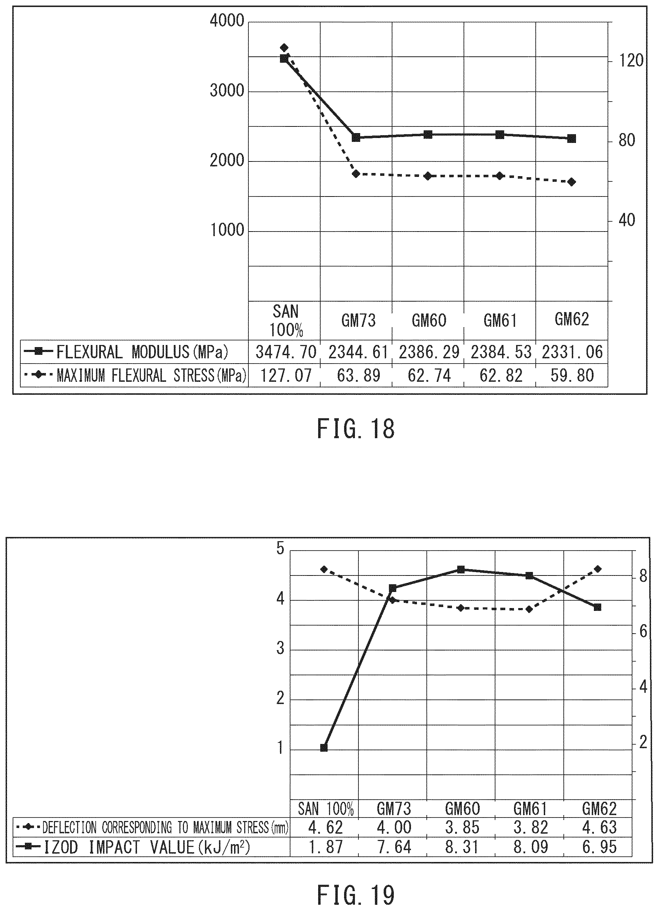

As can be understood from FIGS. 16 and 18, as a radical initiator (Percumyl D or Kayahexa AD) was added to the PVB resin composition, the flexural properties decreased compared with the sample with 100 % SAN, however, good flexural properties for practical applications were obtained. More specifically, all the samples that contain Percumyl D or Kayahexa AD had a flexural modulus not smaller than 2000 MPa. This means that they had a flexural strength substantially equal to that of ABS resin. Further, as can be understood from FIGS. 17 and 19, the impact value significantly increased as a radical initiator (Percumyl D or Kayahexa AD) was added to a PVB resin composition.

To examine the effects of changes in the amount of radical initiator on impact value, as can be understood from FIGS. 17 and 19, samples with a radical initiator in an amount of 0.04 parts by weight exhibited the best impact value.

In terms of toughness, while the sample pieces with 100 % SAN broke in the bending tests, almost no sample piece containing a radical initiator broke (some pieces of sample GM72 which contained Percumyl D in 0.02 parts by weight broke at a deflection of 19 mm).

To examine the effects of changes in the type of radical initiator on the properties, samples with Percumyl D exhibited better values of both flexural strength and impact value than those with Kayahexa AD.

### [5: Considerations about Rubber Composition]

Different types of rubber composition added to SAN resin and different amounts were used to make samples GM240, GM94, GM116, GM244, GM117, GM82, GM95, GM114, GM113, and GM115. The details of the compositions are shown in Table 4. Then, their flexural properties (i.e. flexural modulus, maximum flexural stress and deflection corresponding to maximum flexural stress) and impact resistance (i.e. Izod impact value) were measured.

The SAN resin used was a pellet-shaped SAN resin from Nippon A & L Inc. (under the product name of "Litac-A 120PCF") (in the tables below, this SAN resin is referred to as "SAN(III)"). The manufacturer discloses that the mechanical properties of this SAN resin are as follows: flexural modulus: 3600 MPa, maximum flexural stress: 124 MPa, and impact value: 1.5 kJ/M² (in Charpy impact tests of notched specimens). As a cold-resistant NBR, an NBR from Zeon Corporation (under the product name of "Nipol DN320") was used. The SBRs used were a SBR from Zeon Corporation (under the product name of "Nipol 1502", random-type copolymer), and a block SBR from Zeon Corporation (under the product name of "Nipol NS380S", block-type copolymer) (in the tables below, the random-type SBR is referred to as "Standard SBR", while the block-type SBR is referred to as "Block SBR"). The polybutadiene rubber (BR) used was a BR from Zeon Corporation (under the product name of "Nipol 1220SG").

**[Table 4]**

| | Sample | Base material (parts by weight) | | Additive (parts by weight) | | | | | | Flexural modulus (MPa) | Maximum Flexural stress (MPa) | Deflection corresponding to maximum stress (mm) | Izod impact value (kJ/m²) |
|---|---|---|---|---|---|---|---|---|---|---|---|---|---|
| | | SAN | PVB | Rubber | | | | | Radical initiator | | | | |
| | | SAN(III) (vir.) | Standard PVB | Standard NBR | High cold-resistant NBR | Block SBR | Standard SBR | BR | Percumyl D | | | | |
| Inventive ex. | GM240 | 85 | 15 | 15 | | | | | - | 2443.32 | 75.47 | 4.55 | 2.96 |
| | GM94 | 85 | 15 | | 15 | | | | - | 2573.80 | 61.65 | 4.32 | 4.84 |
| | GM116 | 85 | 15 | | | 15 | | | - | 2639.99 | 66.44 | 6.68 | 4.10 |
| | GM244 | 85 | 15 | | | | 15 | | - | 2536.66 | 67.14 | 4.62 | 2.73 |
| | GM117 | 85 | 15 | | | | | 15 | - | 2335.62 | 49.79 | 5.10 | 2.83 |
| | GM82 | 85 | 15 | 15 | | | | | 0.04 | 2536.34 | 72.21 | 4.54 | 4.56 |
| | GM95 | 85 | 15 | | 15 | | | | 0.04 | 2589.95 | 64.73 | 6.18 | 6.26 |
| | GM114 | 85 | 15 | | | 15 | | | 0.04 | 2579.50 | 65.83 | 7.22 | 4.05 |
| | GM113 | 85 | 15 | | | | 15 | | 0.04 | 2322.45 | 62.19 | 4.90 | 2.65 |
| | GM115 | 85 | 15 | | | | | 15 | 0.04 | 2286.40 | 56.85 | 4.94 | 2.84 |

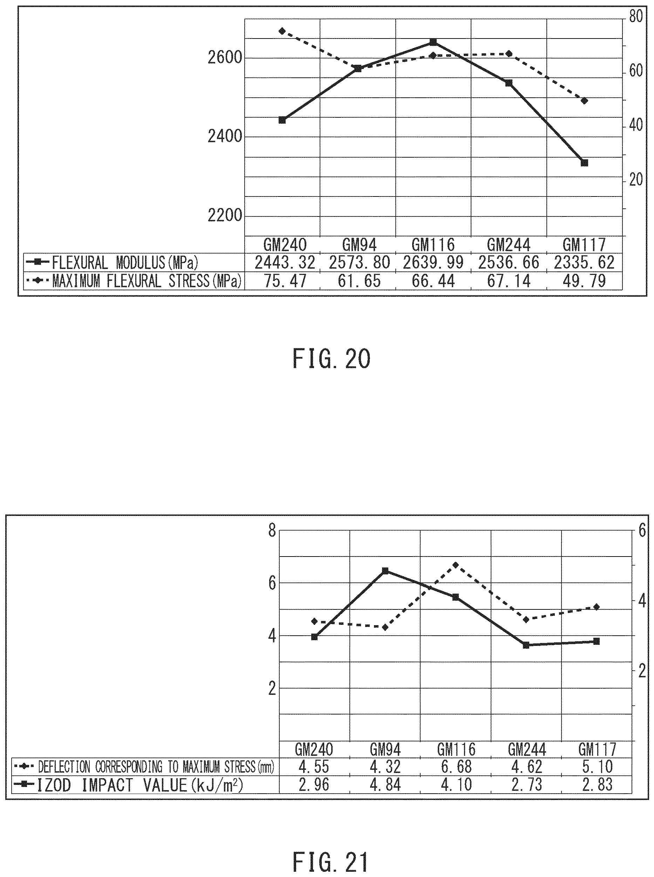

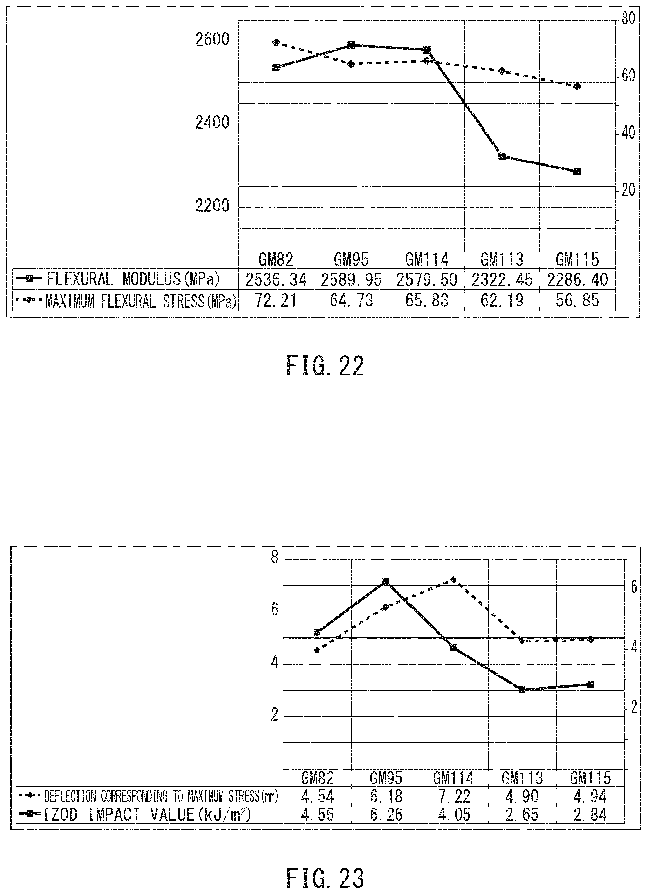

The measurements from the above measuring method are shown in Table 4 and FIGS. 20 to 23.

As can be understood from FIGS. 20 to 23, good properties were obtained when the block SBR or NBR was selected as a rubber composition added to the PVB resin composition, regarding both flexural properties and impact resistance.

Further, no piece of the PVB resin compositions containing cold-resistant NBR or oil-resistant NBR (GM240, GM94, GM82 and GM95) broke. On the other hand, the PVB resin compositions containing BR (GM117 and GM115) broke at a deflection of 7 mm at most. The PVB resin compositions containing the block SBR (GM116 and GM114) broke at a deflection of 10 to 16 mm. The PVB resin compositions containing the random copolymer SBR (GM244 and GM113) broke at a deflection of 5 to 7 mm. This shows that NBR or block SBR is preferably used as a rubber composition added to the PVB resin composition to provide good toughness.

### [6: Considerations about Recycled SAN Resin and Other Materials]

Different types of recycled SAN resin used as SAN resin were used to make samples GM63, GM19, SAN0, GM23, GM28, GM40 and GM46. The details of the compositions are shown in Table 5. Since samples GM63, GM19 and SAN0 contain no PVB resin, they are comparative examples in the context of the present invention. Then, their flexural properties (i.e. flexural modulus, maximum flexural stress and deflection corresponding to maximum flexural stress) and impact resistance (i.e. Izod impact value) were measured.

The SAN used resins were the above SAN(I), SAN(II) and a SAN resin (pellet-shaped) that is a recycled material discharged by Komorijushi Co., Ltd. (in the tables below, this SAN resin is referred to as "SAN(IV)". SAN(IV) is a recycled SAN resin made in China. The NBR used was a recycled NBR (uncrosslinked) provided by Naphtha Ltd. (in the tables below, this NBR is referred to as "Re-NBR"). The natural rubber (NR) used was a recycled NR (uncrosslinked) provided by Naphtha Ltd. (in the tables below, this NR is referred to as "Re-NR").

**[Table 5]**

| | Sample | Base material (parts by Weight) | | | | Additive (parts by weight) | | | Flexural modulus (MPa) | Maximum flexural stress (MPa) | Deflection corresponding to maximum stress (mm) | Izod impact value (kJ/m²) |
|---|---|---|---|---|---|---|---|---|---|---|---|---|
| | | SAN | | | PVB | Rubber | | Radical initiator | | | | |
| | | SAN(II) (recycled) | SAN(IV) (recycled) | SAN(I) (recycled) | Standard PVB | Recycled NBR | Recycled NR | Percumyl D | | | | |
| Comparative ex. | GM63 | 100 | | | - | - | - | - | 3474.70 | 127.07 | 4.62 | 1.87 |
| | GM19 | | 100 | | - | - | - | - | 3420.26 | 107.95 | 3.57 | 2.68 |
| | SAN0 | | | 100 | - | - | - | - | 3682.41 | 135.59 | 4.77 | 2.22 |
| Inventive ex. | GM23 | 85 | | | 15 | 10 | | 0.02 | 2774.10 | 75.29 | 7.59 | 4.58 |
| | GM28 | | 85 | | 15 | 10 | | 0.02 | 3015.83 | 88.83 | 5.18 | 4.43 |
| | GM40 | | | 85 | 15 | 10 | | 002 | 2863.53 | 81.45 | 7.08 | 4.68 |
| | GM46 | 85 | | | 15 | | 10 | 0.02 | 2714.41 | 60.36 | 5.95 | 2.24 |

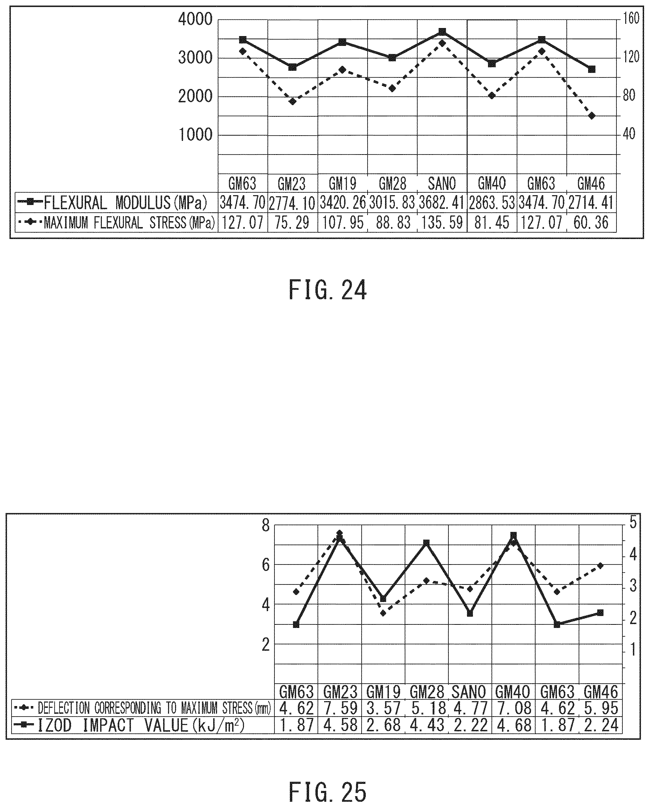

The measurements from the above measuring method are shown in Table 5 and FIGS. 24 and 25.

As can be understood from FIGS. 24 and 25, samples GM23, GM28 and GM40 containing PVB resin and recycled NBR had practically the same flexural properties as, and better impact resistances than, samples GM63, GM19 and SAN0 containing no PVB resin, regardless of the type of recycled SAN resin.

Further, as can be understood from FIGS. 24 and 25, sample GM46 containing PVB resin and recycled NR had practically the same flexural properties as, and a better impact resistance than, sample GM63 containing no PVB resin.

Sample GM46 containing recycled NR as the rubber composition broke at a deflection smaller than that for samples GM23, GM28 and GM40 containing recycled NBR as the rubber composition. This shows that, in terms of toughness, NBR is more suitable than NR as the rubber composition. However, even sample GM46 containing recycled NR as the rubber composition broke at a deflection of 10 to 12 mm. Thus, it can be said that sample GM46 had a good toughness for practical applications.

### [7: Considerations about Proportions of PVB Resin and Rubber Composition]

Different proportions of PVB resin and rubber composition were used to make samples GM91, GM93, GM90, GM92 and GM82. The details of the compositions are shown in Table 6. Then, their flexural properties (i.e. flexural modulus, maximum flexural stress and deflection corresponding to maximum flexural stress) and impact resistance (i.e. Izod impact value) were measured. Further, sample GM89 containing no PVB resin was made as a comparative example. The details of the compositions thereof are also shown in Table 6.

**[Table 6]**

| | Sample | Base material (parts by weight) | | Additive (parts by weight) | | Flexural modulus (MPa) | Maximum flexural stress (MPa) | Deflection corresponding to maximum stress (mm) | Izod impact value (kJ/m²) |
|---|---|---|---|---|---|---|---|---|---|
| | | SAN | PVB | Rubber | Radical initiator | | | | |
| | | SAN(III) (vir.) | Standard PVB | Standard NBR | Percumyl D | | | | |
| Inventive ex. | GM91 | 95 | 5 | 5 | 0.04 | 3227.47 | 102.20 | 3.61 | 3.57 |
| | GM93 | 95 | 5 | 15 | 0.04 | 2712.95 | 88.26 | 4.72 | 4.30 |
| | GM90 | 90 | 10 | 10 | 0.04 | 2748.73 | 81.64 | 4.64 | 4.42 |
| | GM92 | 90 | 10 | 15 | 0.04 | 2643.57 | 78.52 | 4.45 | 4.67 |
| | GM82 | 85 | 15 | 15 | 0.04 | 2536.34 | 72.21 | 4.54 | 4.56 |
| Comparative ex | GM89 | 100 | - | 18 | 0.04 | 2487.31 | 87.33 | 5.30 | 6.88 |

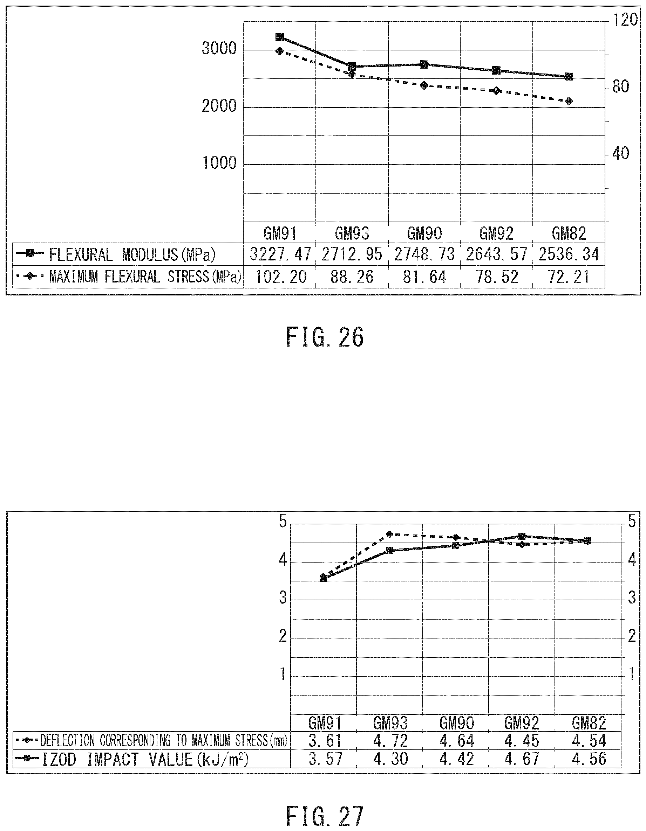

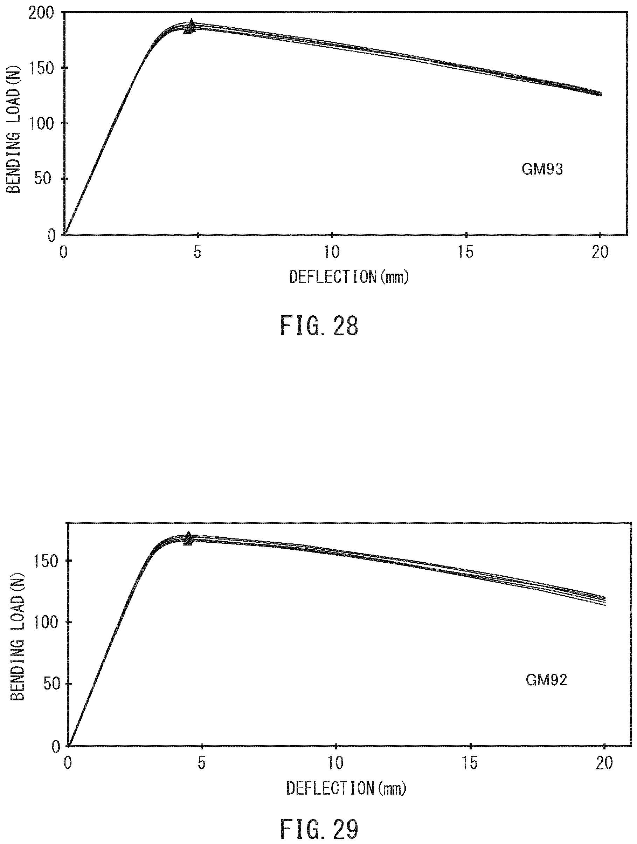

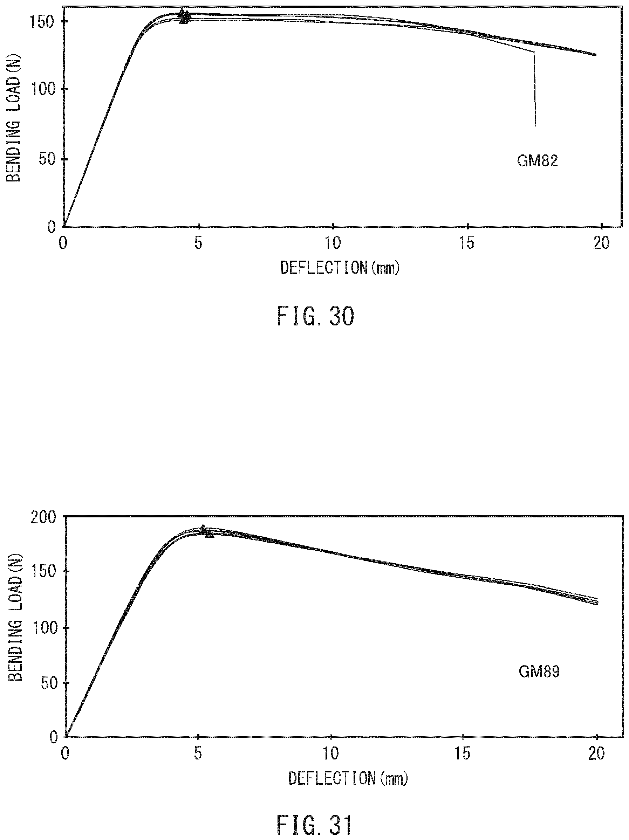

The measurements from the above measuring method are shown in Table 6 and FIGS. 26 and 27. Further, graphs illustrating the relationships between deflection and bending load in the bending tests conducted on samples GM93, GM92, GM82 and GM89 are shown in FIGS. 28 to 31. In FIGS. 28 to 31, the point on a curve with the maximum bending load is indicated by "▲" (the same applies to other graphs referred to further below).

As can be understood from FIGS. 26 and 27, when the amount of PVB resin added was constant and the amount of NBR added was increased (GM91→GM93, GM90→GM92), the flexural strength decreased but the impact resistance improved.

Further, a comparison of samples GM93, GM92 and GM82 with an NBR amount of 15 parts by weight shows that substantially the same properties were obtained when the amount of PVB resin was 5, 10 and 15 parts by weight, regarding both flexural properties and impact resistance.

Based on FIGS. 28 to 31, the change in load from the maximum load point to the value encountered when the deflection was 20 mm was calculated. In GM89 with a PVB resin content of 0 parts by weight, the rate of change in load was 32.5 %. In GM 93 with a PVB resin content of 5 parts by weight, the rate of change in load was 32.5 %. In GM92 with a PVB resin content of 10 parts by weight, the rate of change in load was 30.5 %. In GM82 with a PVB resin content of 15 parts by weight, the rate of change in load was 20.4 %. Further, the change in load from the maximum load point to the value encountered when the deflection was 12 mm was calculated. In GM89 with a PVB resin content of 0 parts by weight, the rate of change in load was about 16 %. In GM 93 with a PVB resin content of 5 parts by weight, the rate of change in load was about 11 %. In GM92 with a PVB resin content of 10 parts by weight, the rate of change in load was about 9 %. In GM82 with a PVB resin content of 15 parts by weight, the rate of change in load was about 4 %. Thus, it is assumed that the rate of decrease in load decreases as the amount of PVB resin added increases.

This is presumably because the radical initiator caused the rubber composition and PVB resin to be radically crosslinked, strengthening the bond at the boundaries between the rubber composition and PVB resin. It is assumed that the strengthened bond at the boundaries between the rubber composition and PVB resin prevents boundary separation between the materials. To sum up, the above shows that, as the PVB resin, rubber composition and radical initiator were added to SAN resin, the flexural properties and impact resistance were modified and a good toughness was obtained.

### [8: Considerations about Additives]

Different types of additives added to SAN resin were used to make samples GM75, GM76, GM77, GM78 and GM79. The details of the compositions are shown in Table 7. Then, their flexural properties (i.e. flexural modulus, maximum flexural stress and deflection corresponding to maximum flexural stress) and impact resistance (i.e. Izod impact value) were measured.

The additives used were compounds of the Modiper A series from NOF Corporation. The Modiper A series products are graft copolymers with polyolefin as the main chain and a vinyl-based polymer as the side chain. More specifically, they are a SAN grafted ethylene-glycidyl methacrylate copolymer (EGMA-g-SAN) (under the product name of "Modiper A4400"), SAN grafted ethylene-ethylacrylate copolymer (EEA-g-SAN) (under the product name of "Modiper A5400"), and SAN grafted
ethylene-ethylacrylate-maleic anhydride copolymer (E/EA/MAH-g-SAN) (under the product name of "Modiper A8400").

**[Table 7]**

| | Sample | Base material (parts by weight) | | Additive (parts by weight) | | | Flexural modulus (MPa) | Maximum flexural stress (MPa) | Deflection corresponding to maximum stress (mm) | Izod impact value (kJ/m²) |
|---|---|---|---|---|---|---|---|---|---|---|
| | | SAN | PVB | Graft copolymer | | | | | | |
| | | SAN(III) (vir.) | Standard PVB | Modiper A4400 | Modiper A5400 | Modiper A8400 | | | | |
| Inventive ex. | GM75 | 85 | 15 | - | - | - | 3220.14 | 92.92 | 3.19 | 2.27 |
| | GM76 | 85 | 15 | 5 | | | 3019.27 | 97.77 | 5.63 | 2.63 |
| | GM77 | 85 | 15 | | 5 | | 3079.63 | 91.97 | 3.59 | 3.85 |
| | GM78 | 85 | 15 | | | 5 | 3021.63 | 98.08 | 5.89 | 3.19 |
| | GM79 | 85 | 15 | | 10 | | 2818.20 | 84.46 | 7.25 | 3.47 |

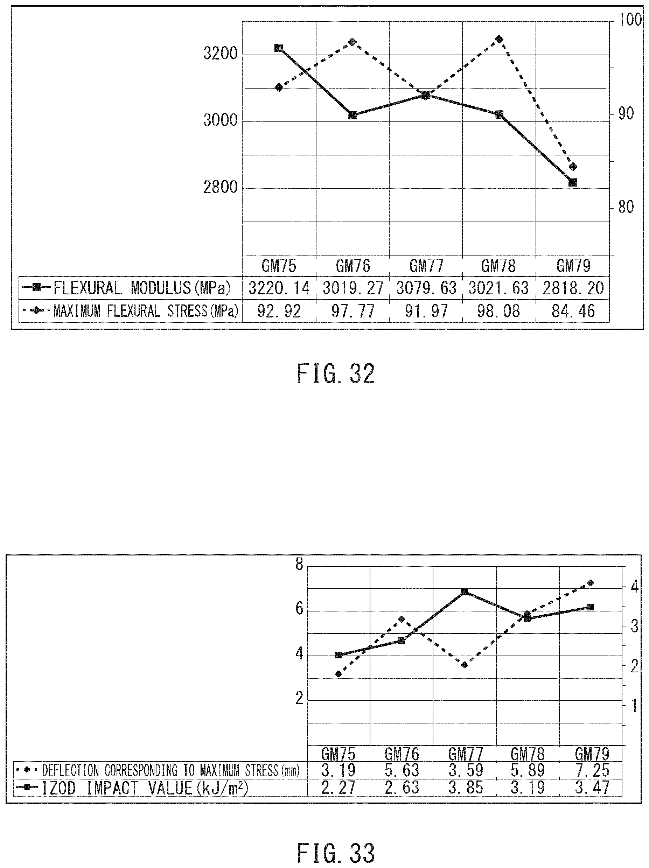

The measurements from the above measuring method are shown in Table 7 and FIGS. 32 and 33.

As can be understood from FIG. 32, samples GM76 to GM79 containing a graft copolymer of the Modiper A series as an additive had decreased flexural modulus compared with sample GM75 containing no graft copolymer. On the other hand, as can be understood from FIG. 33, samples GM76 to GM79 containing a graft copolymer of the Modiper A series as an additive had increased impact value compared with sample GM75 containing no graft copolymer.

In the bending tests of samples GM77 and GM79, GM77 with an amount of added graft copolymer of 5 parts by weight broke at a deflection of about 3 mm, while GM79 with an amount of added graft copolymer of 10 parts by weight did not break even at a deflection of 20 mm. This shows that increasing the amount of added graft copolymer to about 10 parts by weight results in good flexural properties.

The graft copolymers of the Modiper A series have the shape of pellets. As such, during the manufacturing process, mixing a graft copolymer into resin was easier than mixing a small amount of radical initiator into resin.

### [9: Considerations about PVB Amount]

Different amounts of PVB resin added to virgin SAN resin were used to make samples GM101, GM102 and GM103. The details of the compositions are shown in Table 8. Then, their flexural properties (i.e. flexural modulus, maximum flexural stress and deflection corresponding to maximum flexural stress) and impact resistance (i.e. Izod impact value) were measured.

**[Table 8]**

| | Sample | Base material (parts by weight) | | Additive (parts by weight) | Flexural modulus (Mpa) | Maximum flexural stress (MPa) | Deflection corresponding to maximum stress (mm) | Izod impact value (kJ/m²) |
|---|---|---|---|---|---|---|---|---|
| | | SAN | PVB | Radical initiator | | | | |
| | | SAN(II) (recycled) | Standard PVB | Standard D | | | | |
| Inventive ex. | GM101 | 95 | 5 | 0.04 | 3454.64 | 101.47 | 3.38 | 2.88 |
| | GM102 | 90 | 10 | 0.04 | 3394.54 | 97.33 | 3.29 | 2.17 |
| | GM103 | 85 | 15 | 0.04 | 3293.82 | 92.79 | 3.21 | 1.94 |

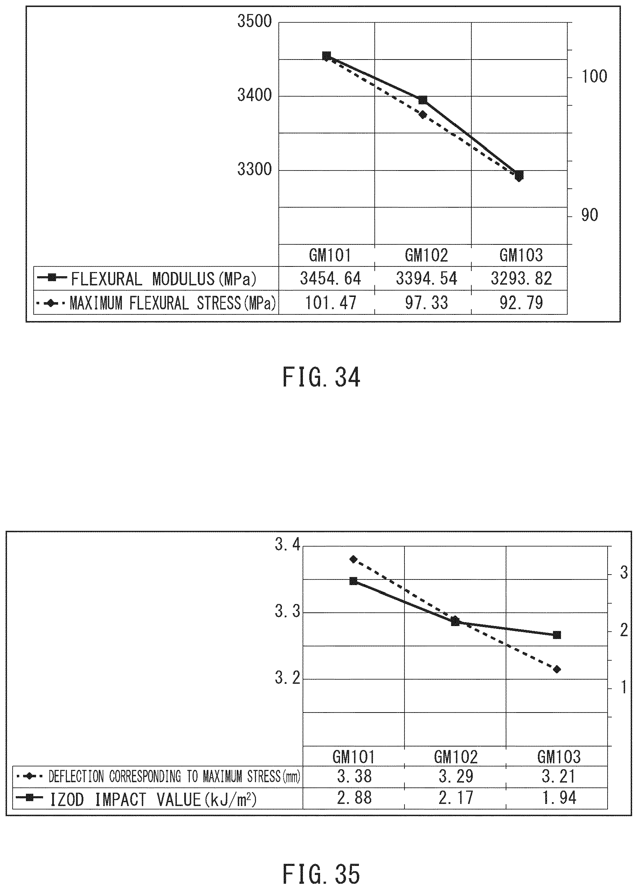

The measurements from the above measuring method are shown in Table 8 and FIGS. 34 and 35.

As can be understood from FIGS. 34 and 35, when a radical initiator was added without adding a rubber composition, the flexural properties and impact resistance decreased as the proportion of PVB resin increased. This is presumably because adding a radical initiator without adding a rubber composition causes a crosslinking structure to be formed in the PVB resin. As such, if the PVB resin composition contains no rubber composition, it is preferable that no radical initiator is added.

### [10: Considerations about Additives]

Different types of additive added to SAN resin and different amounts of additive were used to make samples GM107, GM108, GM109, GM243, GM111, GM110, GM72, GM45, GM49, GM67, GM70, GM73, GM53, GM52, GM60 and GM71. The details of the compositions are shown in Table 9. Then, their flexural properties (i.e. flexural modulus, maximum flexural stress and deflection corresponding to maximum flexural stress) and impact resistance (i.e. Izod impact value) were measured.

The ethylene-vinyl acetate copolymer (EVA) used was an ethylene-vinyl acetate copolymer resin (virgin) from Tosoh Corporation (under the product name of "Ultrathene"). The polybutylene adipate-butylene terephthalate copolymer (PBAT) used was a biodegradable plastic from BASF SE (under the product name of "ECOFLEX"). The polycarbonate (PC) used was a PC from Sumika Styron Polycarbonate Ltd. (under the product name of "Calibre 301-30"). The polycarbonate (PC) was added to improve heat resistance. The polybutylene adipate-butylene terephthalate copolymer (PBAT) was added to improve the affinity of PC and SAN.

**[Table 9]**

| | Sample | Base material (parts by weight) | | | Additive (parts by weight) | | | | | | Flexural modulus (MPa) | Maximum flexural stress (MPa) | Deflection corresponding to maximum stress (mm) | Izod impact value (kJ/m²) |
|---|---|---|---|---|---|---|---|---|---|---|---|---|---|---|
| | | SAN | | PVB | Rubber | Radical initiator | | Others | | | | | | |
| | | SAN(III) (vir.) | SAN(II) (recycled) | Standard PVB | Standard NBR | Percumyl D | Kayahexa AD | EVA (vir.) | PBAT | PC (vir.) | | | | |
| Inventive ex. | GM107 | 85 | | 15 | - | 0.04 | | 5 | | | 2961.15 | 86.46 | 6.96 | 3.46 |
| | GM108 | 85 | | 15 | - | 0.04 | | 10 | | | 2633.95 | 56.56 | 4.14 | 2.70 |
| | GM109 | 85 | | 15 | - | 0.04 | | 15 | | | 2212.62 | 39.21 | 3.21 | 2.65 |
| | GM243 | 85 | | 15 | 15 | 0.04 | | 5 | | | 2361.89 | 66.50 | 6.26 | 3.62 |
| | GM111 | 85 | | 15 | 15 | 0.04 | | 10 | | | 2100.45 | 52.93 | 4.74 | 4.55 |
| | GM110 | 85 | | 15 | 15 | 0.10 | | 15 | | | 2273.03 | 41.46 | 3.45 | 3.56 |
| | GM72 | | 85 | 15 | 20 | 0.02 | | | | | 2333.65 | 63.36 | 3.99 | 8.07 |
| | GM45 | | 85 | 15 | 20 | 0.02 | | | | 10 | 2344.54 | 64.94 | 4.77 | 5.92 |
| | GM49 | | 85 | 15 | 20 | 0.02 | | | 1 | 10 | 2449.74 | 69.94 | 4.74 | 4.56 |
| | GM67 | | 85 | 15 | 20 | 004 | | | | | 2365.42 | 62.45 | 3.80 | 8.96 |
| | GM70 | | 85 | 15 | 20 | 0.04 | | | | 10 | 2306.34 | 65.69 | 4.37 | 6.75 |
| | GM73 | | 85 | 15 | 20 | | 0.02 | | | | 2344.61 | 63.89 | 4.00 | 7.64 |
| | GM53 | | 85 | 15 | 20 | | 0.02 | | | 10 | 2268.22 | 63.05 | 4.29 | 5.57 |
| | GM52 | | 85 | 15 | 20 | | 0.02 | | 1 | 10 | 2590.75 | 77.12 | 5.10 | 4.62 |
| | GM60 | | 85 | 15 | 20 | | 0.04 | | | | 2386.29 | 62.74 | 3.85 | 8.31 |
| | GM71 | | 85 | 15 | 20 | | 0.04 | | | 10 | 2389.20 | 69.82 | 5.70 | 6.33 |

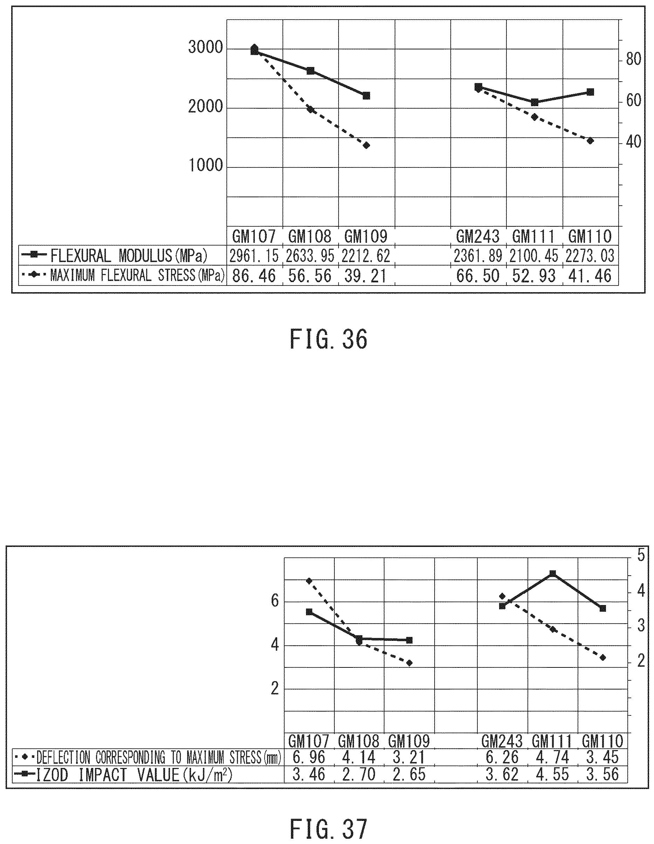

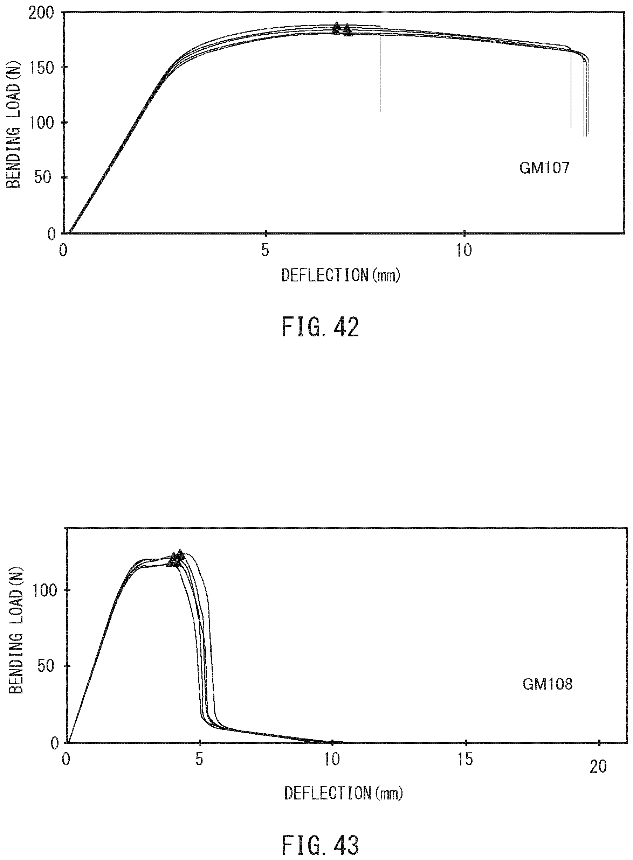

The measurements from the above measuring method are shown in Table 9 and FIGS. 36 to 41. Further, graphs illustrating the relationships between deflection and bending load in the bending tests conducted on samples GM107, GM108, GM109, GM243, GM111 and GM110 are shown in FIGS. 42 to 44.

As can be understood from FIGS. 36 and 37, a comparison of GM107, GM108 and GM109 containing no synthetic rubber and containing EVA shows that both the flexural strength and impact resistance decreased as the amount of EVA was increased. This phenomenon is a reversed one with respect to examples where the amount of synthetic rubber was increased.

Also, as can be understood from FIGS. 42 to 44, the toughness tended to decrease as the amount of EVA was increased. For these reasons, it is assumed that the preferable amount of EVA added to the PVB resin composition is not larger than 5 parts by weight.

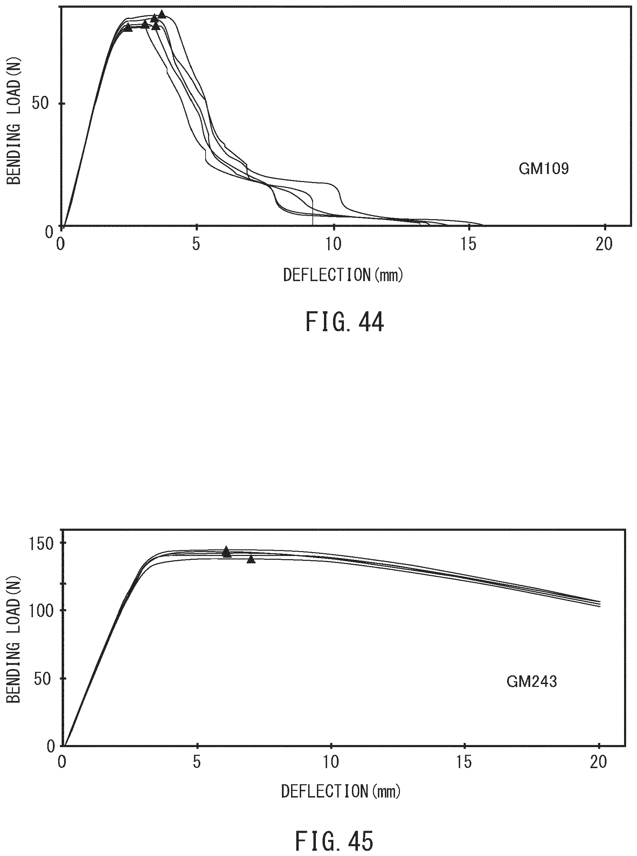

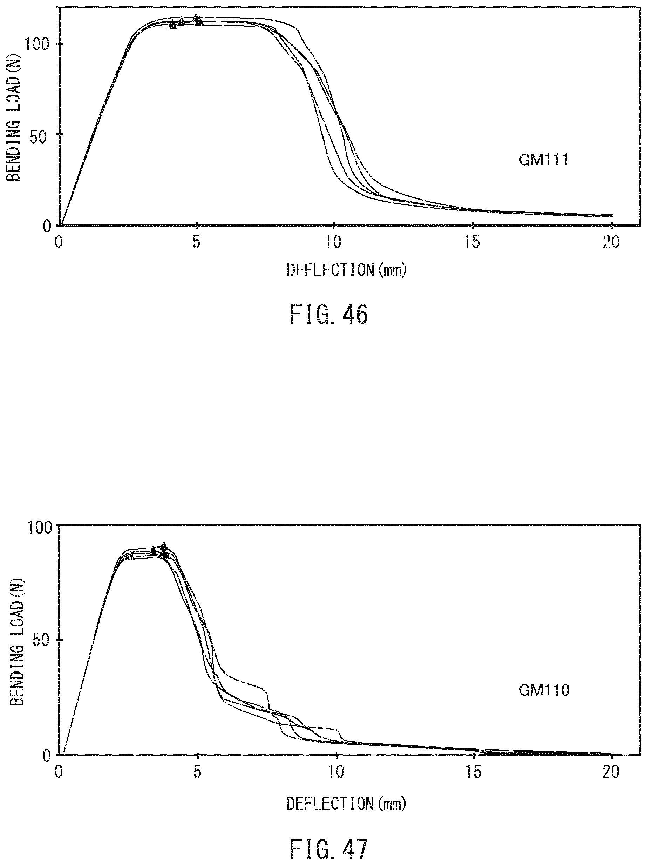

As can be understood from FIGS. 36 and 37, a comparison of GM243, GM111 and GM110 containing synthetic rubber and EVA shows that the flexural properties and impact resistance did not decrease as much as in the samples without synthetic rubber (i.e. samples GM107, GM108 and GM109) as the amount of EVA added was increased. Further, regarding toughness, as can be understood from FIGS. 45 to 47, the decrease in properties of sample GM111 (FIG. 46) containing EVA in 10 parts by weight was more desirable than that of sample GM108 (FIG. 43) containing no synthetic rubber. Thus, it is assumed that, if synthetic rubber and EVA are to be added to the PVB resin composition, the preferred amount of EVA added is 10 parts by weight.

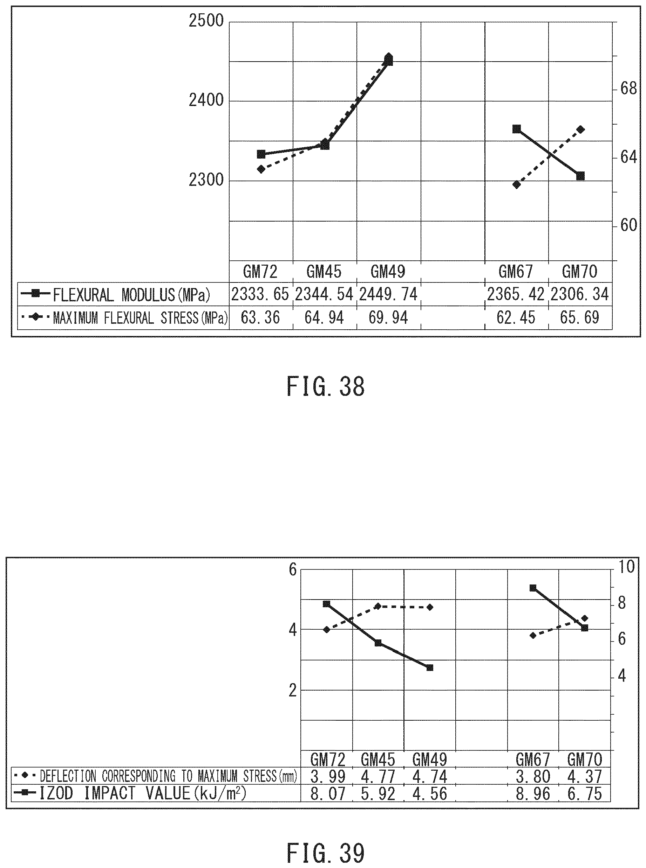

As can be understood from FIGS. 38 and 39, when the amount of radical initiator (Percumyl D) added was 0.02 parts by weight (samples GM72, GM45 and GM49), the flexural properties improved and the impact resistance decreased as PC was added (sample GM45). As PBAT was further added (sample GM49), the flexural properties further improved and the impact resistance further decreased.

For samples GM67 and GM70 containing a radical initiator (Percumyl D) in an amount of 0.04 parts by weight, as can be understood from FIGS. 38 and 39, the flexural properties and impact resistance of sample GM70 with PC in an amount of 10 parts by weight were lower than those of sample GM67 containing no PC.

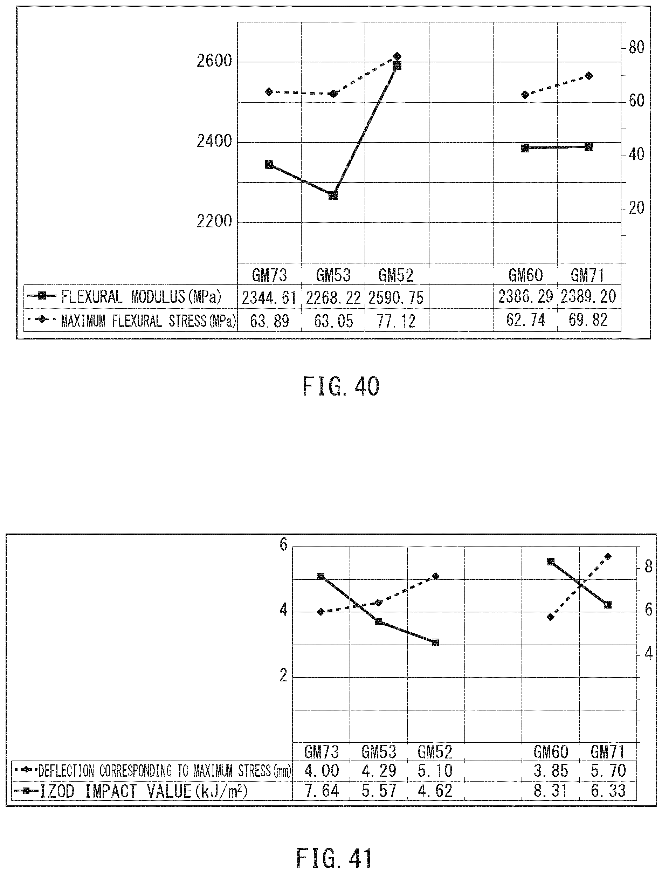

Further, as can be understood from FIGS. 40 and 41, samples GM73, GM53, GM52, GM60 and GM71 using Kayahexa AD instead of Percumyl D as the radical initiator exhibited tendencies similar to those of the samples with Percumyl D.

As something that stood out in PVB resin composition with PC added, an improvement in heat resistance was observed. More specifically, samples GM45, GM49, GM70, GM53, GM52 and GM71 with PC added did not bend due to their own weight even when they were stored in a thermostatic bath at 90 °C for four hours or longer, and, no change in size occurred even after the subsequent cooling. On the other hand, while samples GM73 and GM72 without PC did not bend due to their own weight until 80 °C, a change in their shape due to their own weight was observed at 90 °C.

### [11: Considerations about Weatherability]

Even when PVB resin is exposed to ultraviolet rays, there are only small changes in its properties due to ultraviolet rays, which means that it has good weatherability. In view of this, the inventors examined the weatherability of the PVB resin composition.

The details of the compositions of samples GM66, GM60 and GM67 produced are shown in Table 10. Further, the details of compositions of samples GM60, GM61, GM62, GM67, GM68 and GM69 with different amounts of radical initiator added are shown in Table 11. Then, their flexural properties (i.e. flexural modulus, maximum flexural stress and deflection corresponding to maximum flexural stress) and impact resistance (i.e. Izod impact value) were measured. Further, after these samples were irradiated with an amount of ultraviolet rays equivalent to the level for six months, their flexural properties (i.e. flexural modulus, maximum flexural stress and deflection corresponding to maximum flexural stress) and impact resistance (i.e. Izod impact value) were measured. Irradiation with ultraviolet rays (i.e. degradation promotion test) was done by irradiating specimens with ultraviolet rays using a weather meter (metaling weather meter M6T from Suga Test Instruments Co., Ltd.). The total amount of irradiation energy was 153 MJ/m². The irradiation conditions were as follows: irradiance: 2kW/m² (detection area: 300 to 400 nm), humidity: 50 %, black panel temperature: 63 °C.

**[Table 10]**

| | Sample | Base material (parts by weight) | | Additive (parts by weight) by weight) | | | Flexural modulus (MPa) | Maximum flexural stress (MPa) | Deflection corresponding to maximum stress (mm) | Izod impact value (kJ/m²) |
|---|---|---|---|---|---|---|---|---|---|---|
| | | SAN | PVB | Rubber | Radical initiator | | | | | |
| | | SAN(II) (recycled) | Standard PVB | Standard NBR | Percumyl D | Kayahexa AD | | | | |
| Inventive ex. | GM66 (before UV irradiation) | 85 | 15 | 20 | - | - | 2390.24 | 64.18 | 3.81 | 3.94 |
| | GM66 (after UV irradiation) | 85 | 15 | 20 | - | - | 2463.22 | 68.27 | 11.07 | 4.00 |
| | GM60 (before UV irradiation) | 85 | 15 | 20 | | 0.04 | 2386.29 | 62.74 | 3.85 | 8.31 |
| | GM60 (after UV irradiation) | 85 | 15 | 20 | | 0.04 | 2406.85 | 69.94 | 11.87 | 4.02 |
| | GM67 (before UV irradiation) | 85 | 15 | 20 | 0.04 | | 2365.42 | 62.45 | 3.80 | 8.96 |
| | GM67 (after UV irradiation) | 85 | 15 | 20 | 0.04 | | 2420.19 | 69.72 | 11.46 | 5.70 |

**[Table 11]**

| | Sample | Base material (parts by weight) | | Additive (parts by weight) | | | Flexural modulus (MPa) | Maximum flexural stress (MPa) | Deflection corresponding to maximum stress (mm) | Izod impact value (kJ/m²) |
|---|---|---|---|---|---|---|---|---|---|---|
| | | SAN | PVB | Rubber | Radical initiator | | | | | |
| | | SAN(II) (recycled) | Standard PVB | Standard NBR | Percumyl D | Kayahexa AD | | | | |
| Inventive ex. | GM60 (before UV irradiation) | 85 | 15 | 20 | | 0.04 | 2386.29 | 62.74 | 3.85 | 8.31 |
| | GM60 (after UV irradiation) | 85 | 15 | 20 | | 0.04 | 2406.85 | 69.94 | 11.87 | 4.02 |
| | GM61 (before UV irradiation) | 85 | 15 | 20 | | 0.06 | 2384.53 | 62.82 | 3.82 | 8.09 |
| | GM61 (after UV irradiation) | 85 | 15 | 20 | | 0.06 | 2424.90 | 71.19 | 11.93 | 2.82 |
| | GM62 (before UV irradiation) | 85 | 15 | 20 | | 0.10 | 2331.06 | 59.80 | 4.63 | 6.95 |
| | GM62 (after UV irradiation) | 85 | 15 | 20 | | 0.10 | 2358.32 | 67.21 | 12.02 | 3.76 |
| | GM67 (before UV irradiation) | 85 | 15 | 20 | 0.04 | | 2365.42 | 62.45 | 3.80 | 8.96 |
| | GM67 (after UV irradiation) | 85 | 15 | 20 | 0.04 | | 2420.19 | 69.72 | 11.46 | 5.70 |
| | GM68 (before UV irradiation) | 85 | 15 | 20 | 0.06 | | 2480.89 | 66.21 | 3.85 | 8.48 |
| | GM68 (after UV irradiation) | 85 | 15 | 20 | 0.06 | | 2525.29 | 74.26 | 11.76 | 4.44 |
| | GM69 (before UV irradiation) | 85 | 15 | 20 | 0.10 | | 2413.85 | 63.21 | 4.88 | 7.98 |
| | GM69 (after UV irradiation) | 85 | 15 | 20 | 0.10 | | 2443.85 | 70.09 | 11.80 | 3.37 |

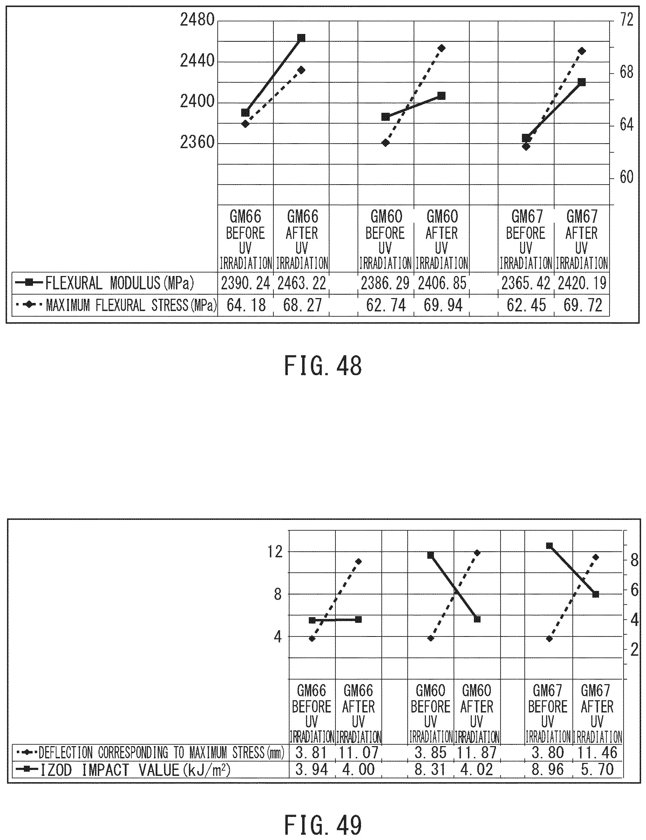

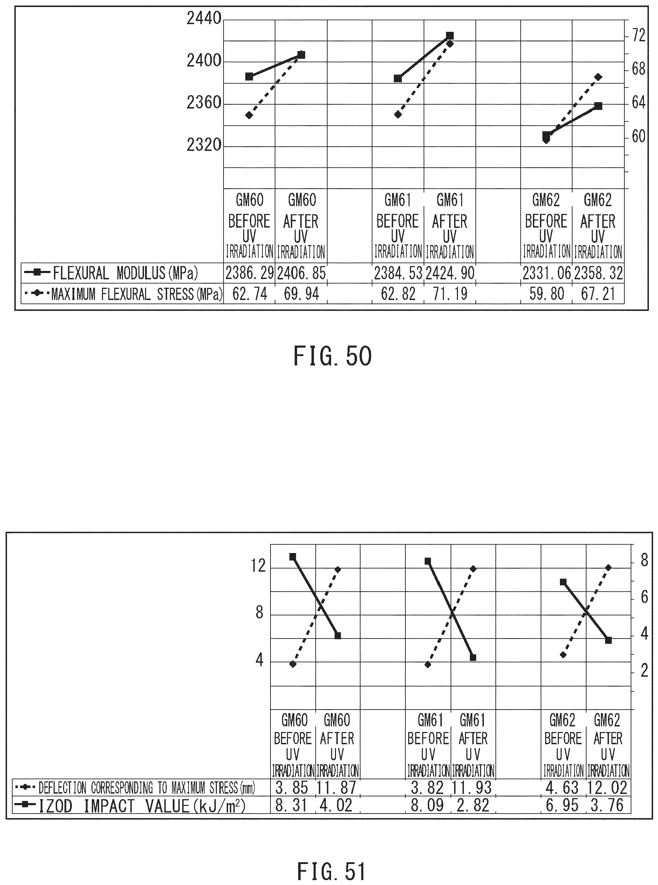

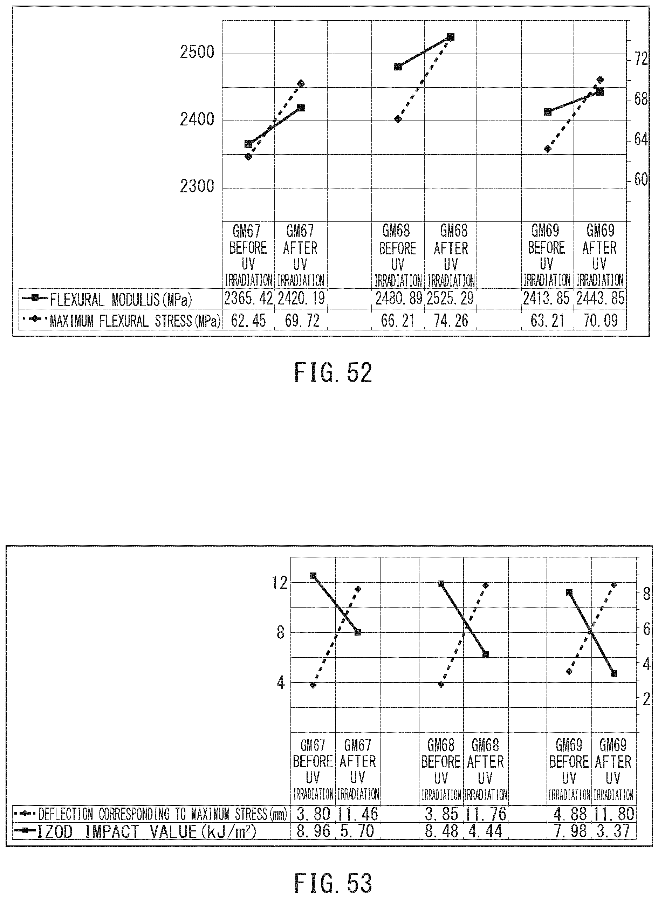

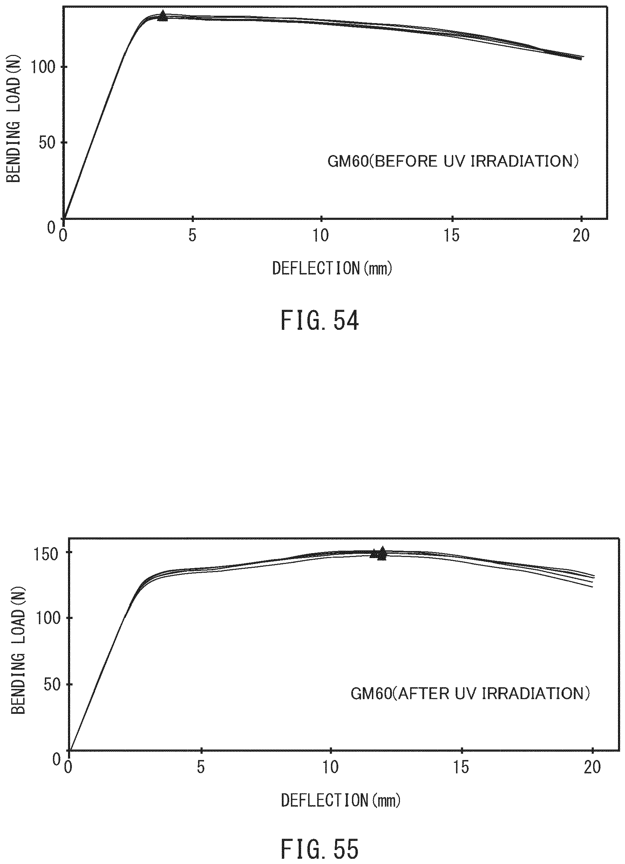

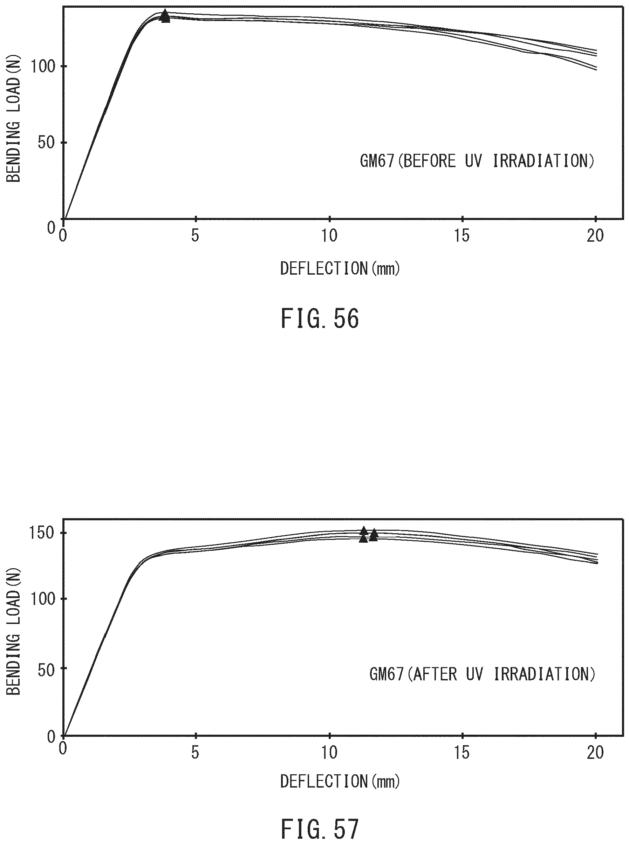

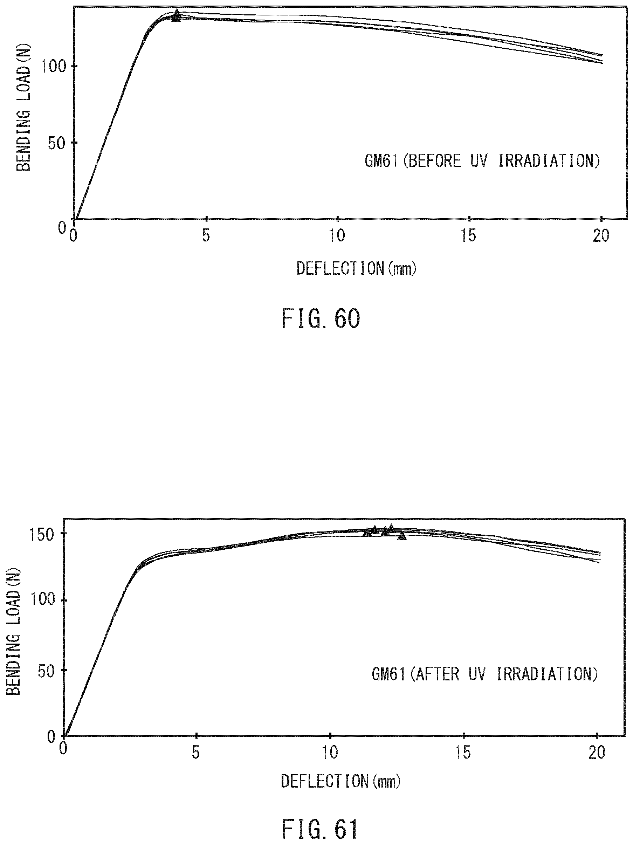

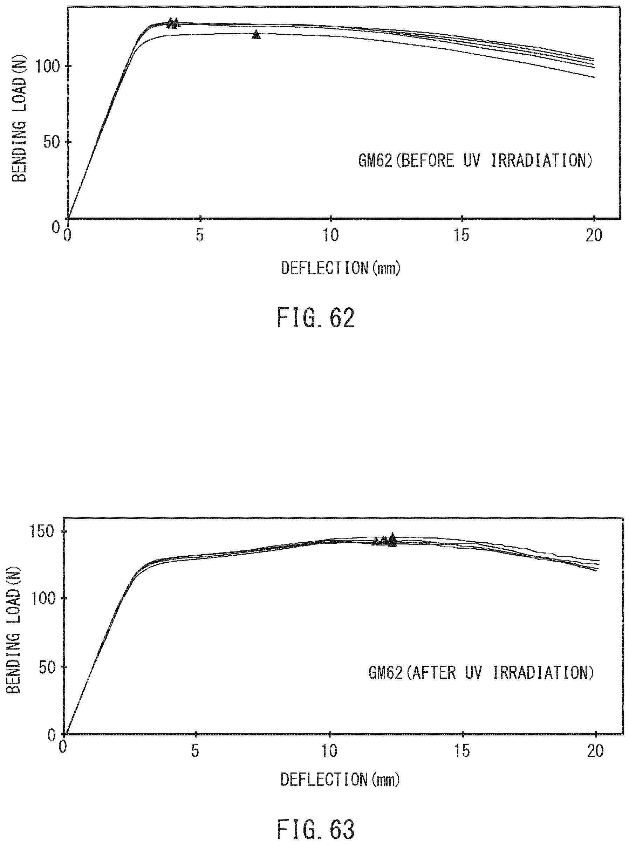

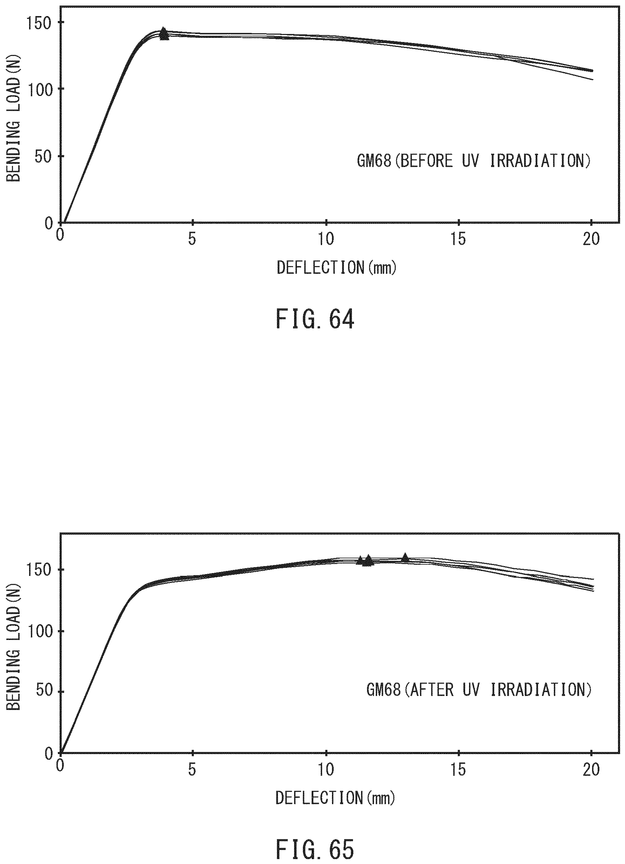

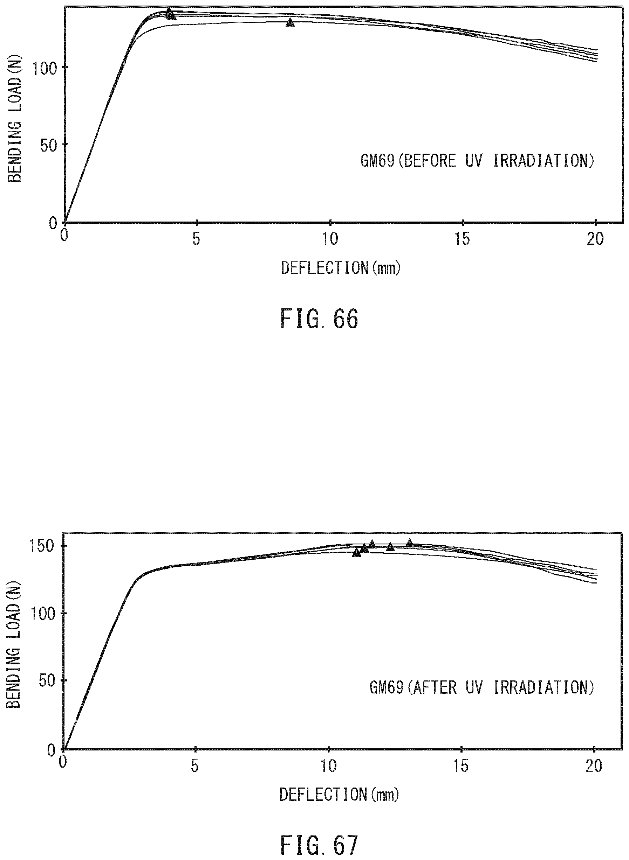

The measurements from the above measuring method are shown in Tables 10 and 11 and FIGS. 48 to 53. Further, graphs illustrating the relationships between deflection and bending load in the bending tests conducted on these samples (before and after irradiation with ultraviolet rays) are shown in FIGS. 54 to 67.

As can be understood from FIGS. 48, 50 and 52, the flexural properties of a PVB resin composition containing a rubber composition were improved as it was irradiated with ultraviolet rays, regardless of whether or not a radical initiator was contained.

As can be understood from FIG. 49, in sample GM66 containing no radical initiator, there was almost no change in impact value due to irradiation with ultraviolet rays, while in samples GM60 and 67 containing a radical initiator, the impact value decreased.

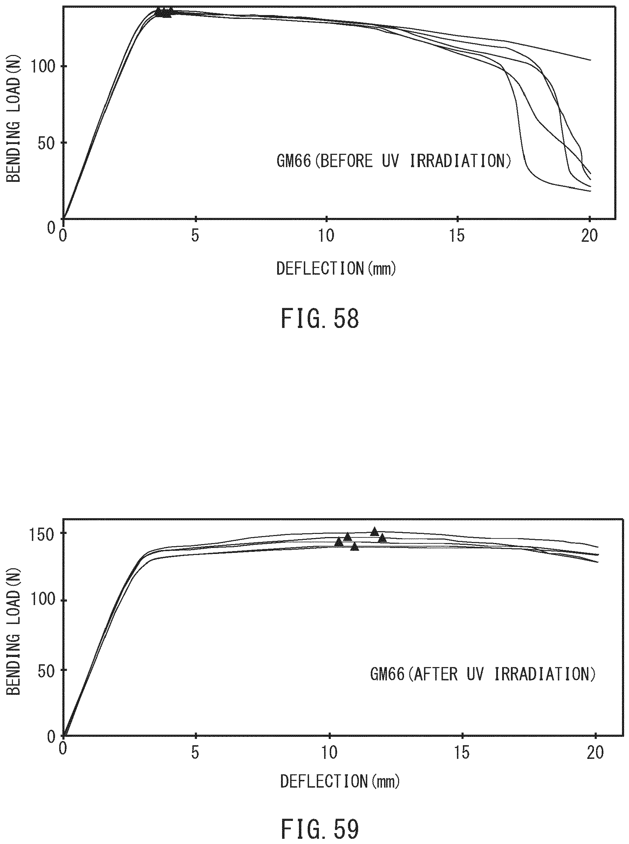

As can be understood from FIGS. 58 to 67, in the samples before irradiation (FIGS. 54, 56, 58, 60, 62, 64 and 78), the maximum deflection was at the deflection where the elastic range transitioned to the plastic range, while in the samples after irradiation with ultraviolet rays (FIGS. 55, 57, 59, 61, 63, 65 and 67), the symbol indicating the maximum deflection is located significantly toward the right in the graphs. That is, the deflection at which the bending load was at its maximum in the bending tests for the specimens after irradiation with ultraviolet rays was larger than the deflection at which the bending load was at its maximum in the bending tests for the specimens before irradiation with ultraviolet rays. This shows that, in the samples after irradiation with ultraviolet rays, the load resistance further increased even after the deflection transitioned from the elastic range to the plastic range, as opposed to the samples before irradiation. This shows that a PVB-containing resin containing SAN resin, PVB resin, synthetic rubber and radical initiator has the property that its toughness is further improved as it is irradiated with ultraviolet rays. It is generally known that resin is degraded by irradiation with ultraviolet rays; on the contrary, it is assumed that the PVB resin composition of the present invention, when used outdoors, for example, is changed to a resin with better properties.

Further, as can be clearly understood from sample GM66, while before irradiation with ultraviolet rays a damage such as crack occurred at a deflection over about 12 mm (FIG. 58), after irradiation with ultraviolet rays no break or crack occurred at a deflection of 20 mm (FIG. 59). Although no radical initiator was added to sample GM66, irradiation with ultraviolet rays apparently caused crosslinking of NBR to proceed such that separation could not easily occur within the composite material.

### [12: Considerations about ABS Resin]

Acrylonitrile-butadiene-styrene (ABS) resin has low weatherability. More specifically, it is known that butadiene structural units in the structure of ABS resin are degraded by ultraviolet rays, degrading the properties of the entire ABS resin. The inventors investigated how the weatherability changed as PVB resin was mixed with ABS resin.

ABS resin and PVB resin were used as a base material to make sample GM65. Further, a sample with 100 % ABS resin was prepared as a comparative example. The details of the compositions are shown in Table 12. Then, their flexural properties (i.e. flexural modulus, maximum flexural stress and deflection corresponding to maximum flexural stress) and impact resistance (i.e. Izod impact value) were measured. Further, after these samples were irradiated with an amount of ultraviolet rays equivalent to the level for six months, their flexural properties (i.e. flexural modulus, maximum flexural stress and deflection corresponding to maximum flexural stress) and impact resistance (i.e. Izod impact value) were measured.

The ABS resin used was an ABS resin (virgin) from Nippon A & L Inc. (under the product name of "Santac AT-08").

**[Table 12]**

| | Sample | Base material (parts by weight) | | Flexural modulus (MPa) | Maximum flexural stress (MPa) | Deflection corresponding to maximum stress (mm) | Izod impact value (kJ/m²) |
|---|---|---|---|---|---|---|---|
| | | ABS | PVB | | | | |
| | | | Standard PVB | | | | |
| Comparative ex. | ABS (before 100 UV irradiation) | | 0 | 2387.83 | 82.34 | 5.44 | 19.91 |
| | ABS (after UV irradiation) | 100 | 0 | 2528.62 | 90.35 | 5.87 | 16.49 |
| Inventive ex. | GM65 (before UV irradiation) | 85 | 15 | 2241.71 | 66.29 | 5.42 | 6.97 |
| | GM65 (after UV irradiation) | 85 | 15 | 2311.97 | 70.86 | 13.35 | 7.83 |

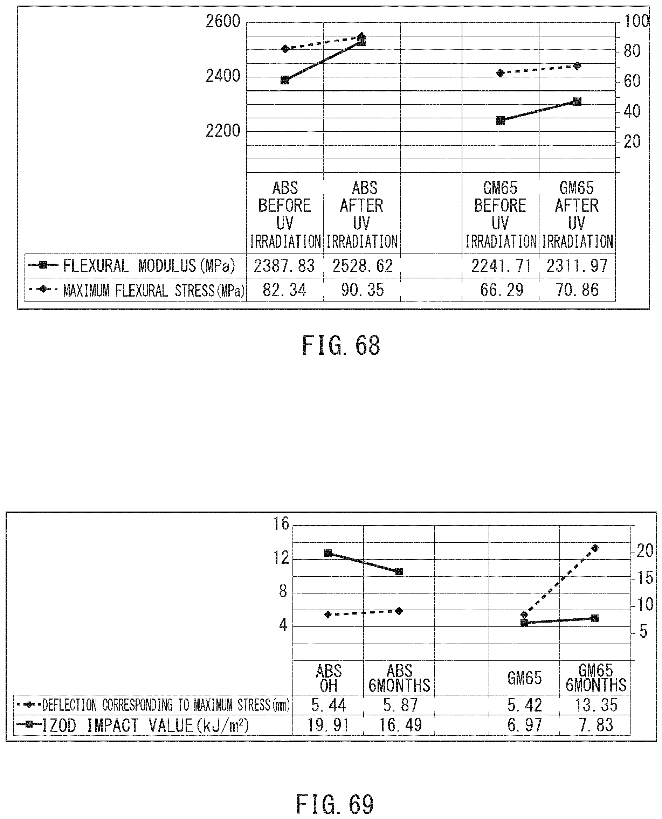

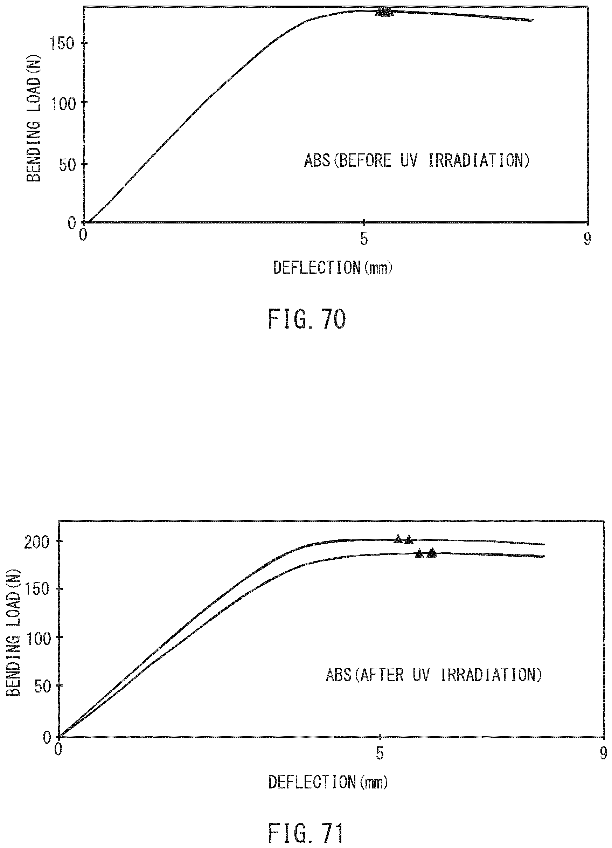

The measurements from the above measuring method are shown in Table 12 and FIGS. 68 and 69. Further, graphs illustrating the relationships between deflection and bending load in the bending tests conducted on these samples (before and after irradiation with ultraviolet rays) are shown in FIGS. 70 to 73.

As can be understood from FIG. 69, in the simple ABS resin containing no PVB resin, the impact value decreased due to irradiation with ultraviolet rays and the deflection was substantially the same as that before irradiation with ultraviolet rays, while in sample GM65 containing PVB resin, the deflection significantly improved and the impact value did not decrease.

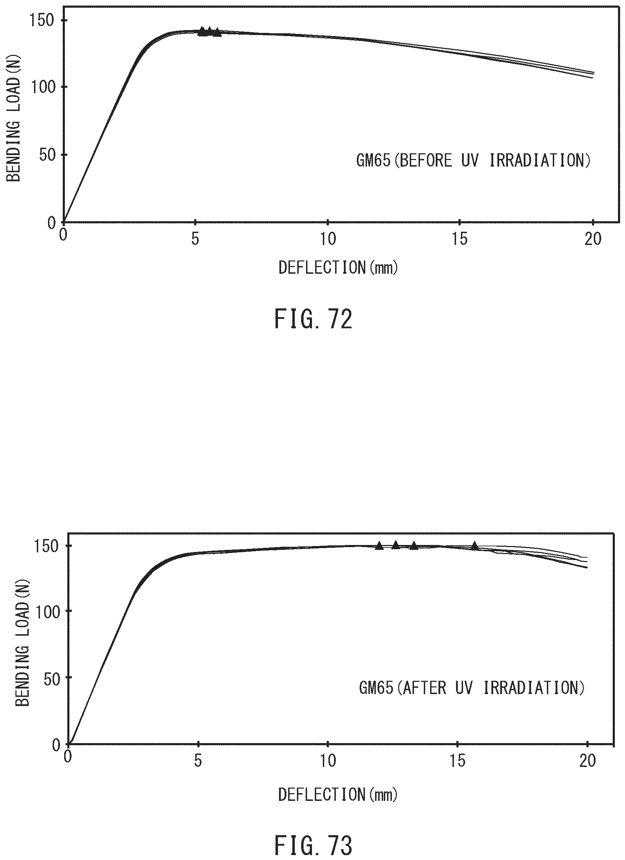

As can be understood from FIGS. 70 to 73, in the simple ABS resin containing no PVB resin, the deflection corresponding to the maximum bending load in the plastic range was substantially the same before and after irradiation with ultraviolet rays (FIGS. 70 and 71), while in sample GM65 containing PVB resin, the deflection corresponding to the maximum bending load significantly increased (FIGS. 72 and 73). This verified that the toughness of a resin composition improves as PVB resin is contained in a resin.

### [13: Considerations about Method of Manufacturing PVB Resin Composition]

Preferably, the amount of radical initiator mixed with a PVB resin composition is 0.01 to 1.0 parts by weight, where the resin forming the base material (i.e. SAN resin and PVB resin in the present embodiment) is in 100 parts by weight, and this amount is smaller than the generally known used amounts of radical initiator. This makes it difficult to mix the radical initiator uniformly into the base material. In view of this, the inventors investigated the effects of changes in manufacture method on the properties of the PVB resin composition.

Samples GM94, GM95P, GM96 were produced whose compositions are shown in Table 13. Among the three samples GM94, GM95 and GM96, samples GM94P and GM95P were made by kneading the materials using a pressure kneader. More specifically, SAN resin and PVB resin (weight ratio: 50/50) and a radical initiator were kneaded by a pressure kneader ("D3-7.5 3L-type Small Pressure Kneader" from Nihon Spindle Manufacturing Co., Ltd.). These specimens were pelletized by a hot cut, and the other materials were then added and dry-blended, and were kneaded once again by a two-screw extruder ("KZW15-45HG" (ϕ=15, L/D=45)) from Technovel Corporation) to pelletize them. The resulting resin composition was molded by an injection molding machine (ES1000 from Nissei Plastic Industrial Co., Ltd.) to make specimens. During production of GM94P and GM95P, all the manufacturing equipment was controlled such that the temperature did not exceed 145 °C. The temperature was set to 145 °C or below in order to reduce the degradation of properties of the PVB resin and to prevent crosslinking of the rubber composition by the used radical initiator from proceeding. In order to facilitate kneading of SAN resin and PVB resin, the equipment was set such that the temperature of a material did not exceed 145 °C and the temperature of the material was kept constant during the kneading step.

Sample GM96 was made without using the pressure kneader but was made using a two-screw extruder ("KZW15-45HG" (ϕ=15, L/D=45)) from Technovel Corporation). More specifically, all the materials were fed into the two-screw extruder and were kneaded while crosslinking reaction was caused by RP techniques. The resulting resin composition was molded by an injection molding machine (ES1000 from Nissei Plastic Industrial Co., Ltd.) to produce specimens.

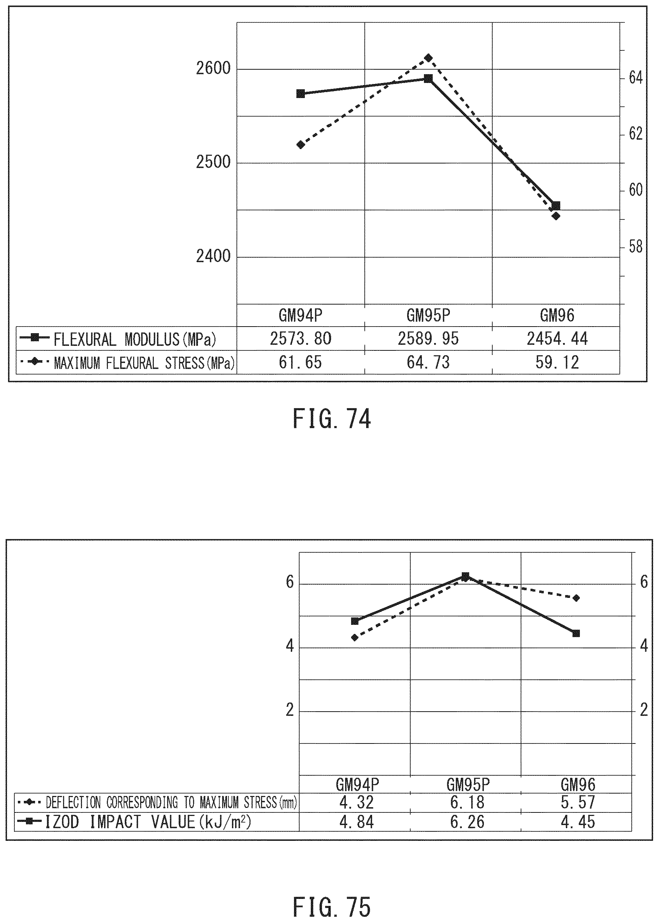

The flexural properties (i.e. flexural modulus, maximum flexural stress and deflection corresponding to maximum flexural stress) and impact resistance (i.e. Izod impact value) of these samples were measured. The measurements are shown in Table 13 and FIGS. 74 and 75.

**[Table 13]**

| | Sample | Base material (parts by weight) | | Additive (parts by weight) | | Flexural modulus (MPa) | Maximum flexural stress (MPa) | Deflection corresponding to maximum stress (mm) | Izod impact value (kJ/m²) |
|---|---|---|---|---|---|---|---|---|---|
| | | SAN | PVB | Rubber | Radical initiator | | | | |
| | | SAN(III) (vir.) | "Standard PVB | High cold-resistant NBR | Percumyl D | | | | |
| Inventive ex. | GM94P (pressure kneader) | 85 | 15 | 15 | - | 2573.80 | 61.65 | 4.32 | 4.84 |
| | GM95P (pressure kneader) | 85 | 15 | 15 | 0.04 | 2589.95 | 64.73 | 6.18 | 6.26 |
| | GM96 | 85 | 15 | 15 | 0.04 | 2454.44 | 59.12 | 5.57 | 4.45 |

As can be understood from FIGS. 74 and 75, a comparison between sample GM96 made without using a pressure kneader and sample GM95P kneaded using a pressure kneader shows that sample GM95P was better in terms of flexural properties and impact resistance. It is thus assumed that the radical initiator exhibited its effects as kneading was performed using a pressure kneader.

### [14: Considerations about Additives]

When PVB resin was added to a PCRM, no improvement in flexural properties and impact resistance at room temperature were observed, which prompted the inventors to examine the effects of adding additives. Samples GM157, GM155, GM149, GM203, GM204, GM155, and GM224 with compositions shown in Tables 14 and 15 were produced. Then, their flexural properties (i.e. flexural modulus, maximum flexural stress and deflection corresponding to maximum flexural stress) and impact resistance (i.e. Izod impact value) were measured. The additives used were the block SBR mentioned above, a compatibility accelerator for polyethylene terephthalate (PET) from Osaka Gas Chemicals Co., Ltd. (under the product name of "MARICOM" (hereinafter simply referred to as "MARICOM", and an acrylic resin (virgin) from Asahi Kasei Chemicals Corporation (under the product name of "Delpet 60N").

Since PVB resin thermally degrades at a temperature of about 200 °C, the manufacture process must be kept essentially at about 180 °C or lower. Accordingly, additives to be added were selected that have a melting temperature that is not higher than the temperature at which the PVB resin thermally degrades.

**[Table 14]**

| | Sample | Base material (parts by weight) | | Additive (parts by weight) | | | Flexural modulus (MPa) | Maximum flexural stress (MPa) | Deflection corresponding to maximum stress (mm) | Izod impact value (kJ/m²) |
|---|---|---|---|---|---|---|---|---|---|---|
| | | PCRM | PVB | Rubber | Others | | | | | |
| | | PCRM(1) | Standard PVB | Block SBR | MARICOM | Acrylic (vir.) | | | | |
| Comparative ex. | GM197 | 100 | - | - | | | 694.58 | 27.18 | 10.01 | 6.18 |
| Inventive ex. | GM157 | 85 | 15 | 15 | | | 522.51 | 19.07 | 9.60 | 16.15 |
| | GM155 | 85 | 15 | - | 5.0 | | 656.49 | 24.75 | 9.72 | 6.47 |
| | GM149 | 85 | 15 | - | | 10 | 844.77 | 28.41 | 8.71 | 4.63 |

**[Table 15]**

| | Sample | Base material (parts by weight) | | Additive (parts by weight) | Flexural modulus (MPa) | Maximum flexural stress (MPa) | Deflection corresponding to maximum stress (mm) | Izod impact value (kJ/m²) |
|---|---|---|---|---|---|---|---|---|
| | | PCRM | PVB | Others | | | | |
| | | PCRM(1) | Standard PVB | MARICOM | | | | |
| Comparative ex. | GM197 | 100 | - | | 694.58 | 27.18 | 10.01 | 6.18 |
| Inventive ex. | GM203 | 85 | 15 | | 624.60 | 24.89 | 9.88 | 5.46 |
| | GM204 | 85 | 15 | 2.5 | 617.06 | 24.02 | 9.92 | 6.45 |
| | GM155 | 85 | 15 | 5.0 | 656.49 | 24.75 | 9.72 | 6.47 |
| | GM224 | 85 | 15 | 7.5 | 591.37 | 23.43 | 10.18 | 6.11 |

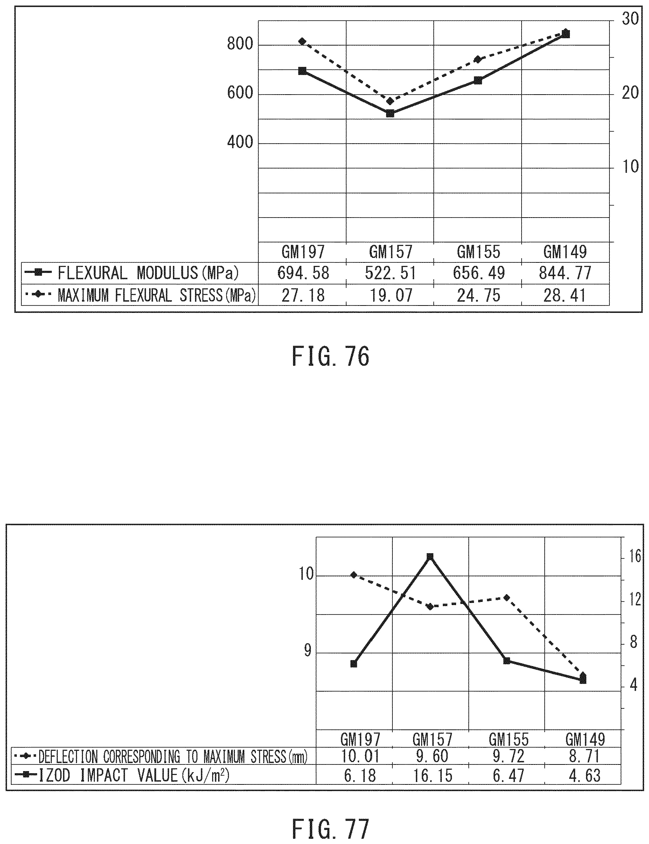

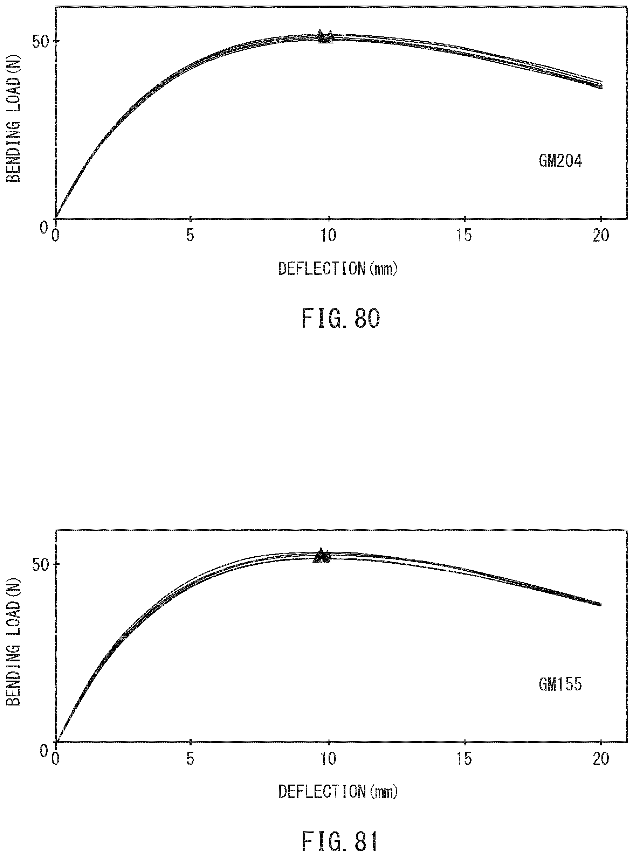

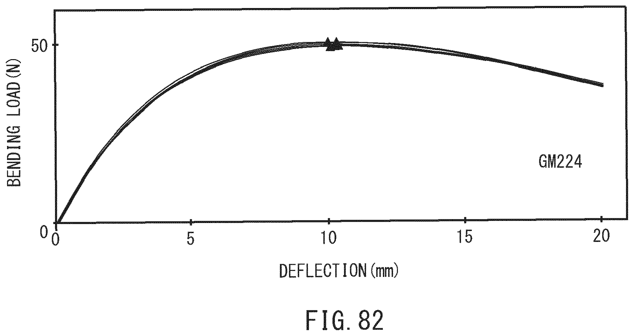

The measurements from the above measuring method are shown in Tables 14 and 15 and FIGS. 76 to 79. Further, graphs illustrating the relationships between deflection and bending load in the bending tests conducted on samples GM204, GM155, and GM224 are shown in FIGS. 80 to 82.

As can be understood from FIGS. 76 and 77, in sample GM157 containing the block SBR as an additive, the impact resistance improved while the flexural properties decreased. Further, in sample GM149 containing an acrylic resin as an additive, the flexural properties improved while the impact resistance decreased. On the other hand, in sample GM155 containing MARICOM as an additive, both the flexural properties and impact resistance were substantially the same as those of the sample without an additive. Since PVB resin to be cascaded is cheaper than PCRM, it is understood that, by adding PVB resin and MARICOM to PCRM, the volume of PCRM can be increased without decreasing the properties of the PCRM, thereby significantly reducing costs. Further, a large amount of PVB resin that is being disposed of as industrial waste can be effectively used as a recycled material.

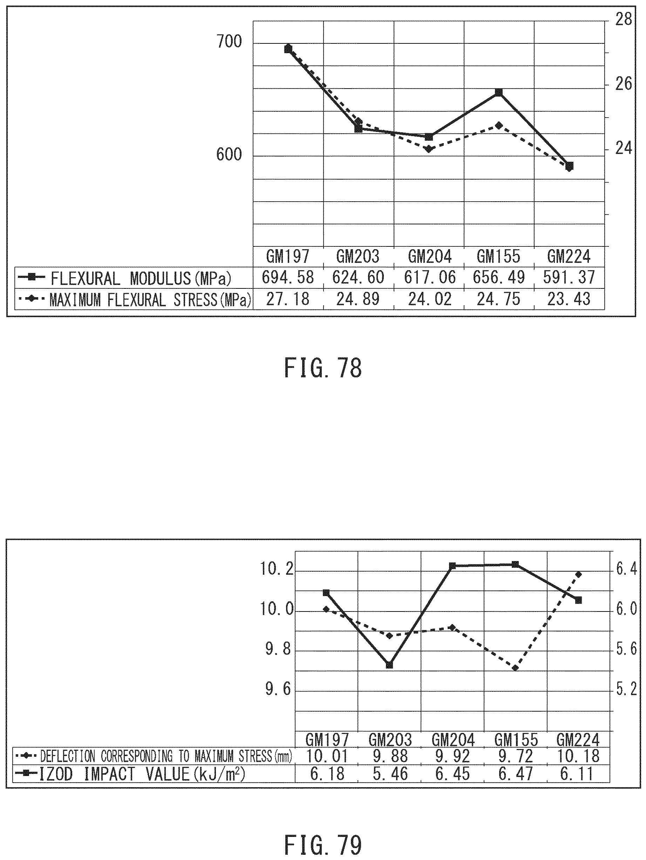

As can be understood from FIGS. 78 and 79, samples GM204, GM155 and GM224 containing MARICOM had a better impact resistance than sample GM203 containing no MARICOM.

As can be understood from FIGS. 80 to 82, when the amount of MARICOM added was 2.5 to 7.5 parts by weight, no break or damage from a crack occurred even at a deflection of 20 mm.

### [15: Considerations about Rubber Composition]

Samples GM237, GM238, GM239, GM245, GM246 and GM247 that use the block SBR or butadiene rubber (BR) as the rubber composition were produced. Further, a sample with 100 % PCRM was produced as a comparative example, i.e. sample GM226. Their compositions are shown in Table 16. Then, their flexural properties (i.e. flexural modulus, maximum flexural stress and deflection corresponding to maximum flexural stress) and impact resistance (i.e. Izod impact value) were measured. The PCRM used was a product discharged by Pax Ltd. (this PCRM will be hereinafter referred to as "PCRM (2)").

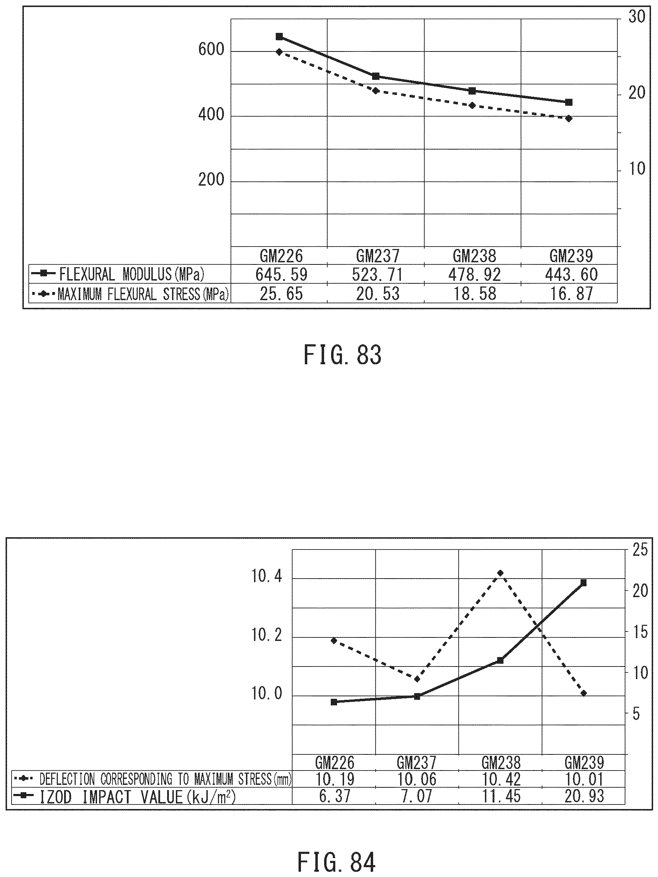

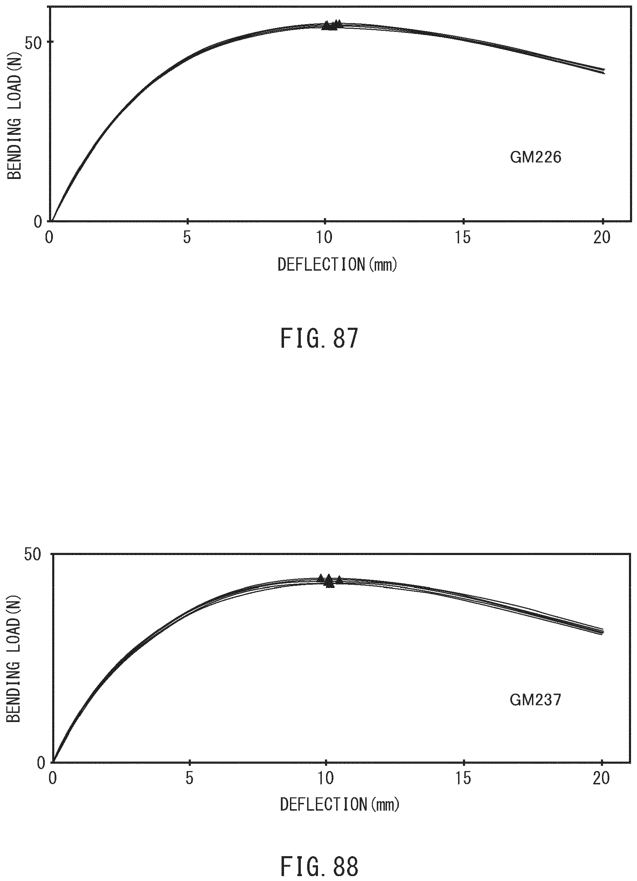

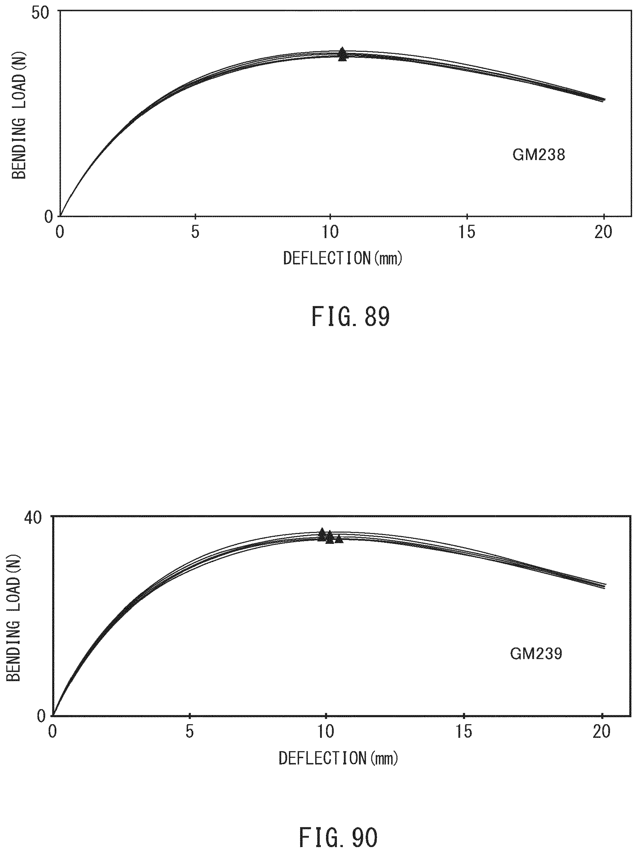

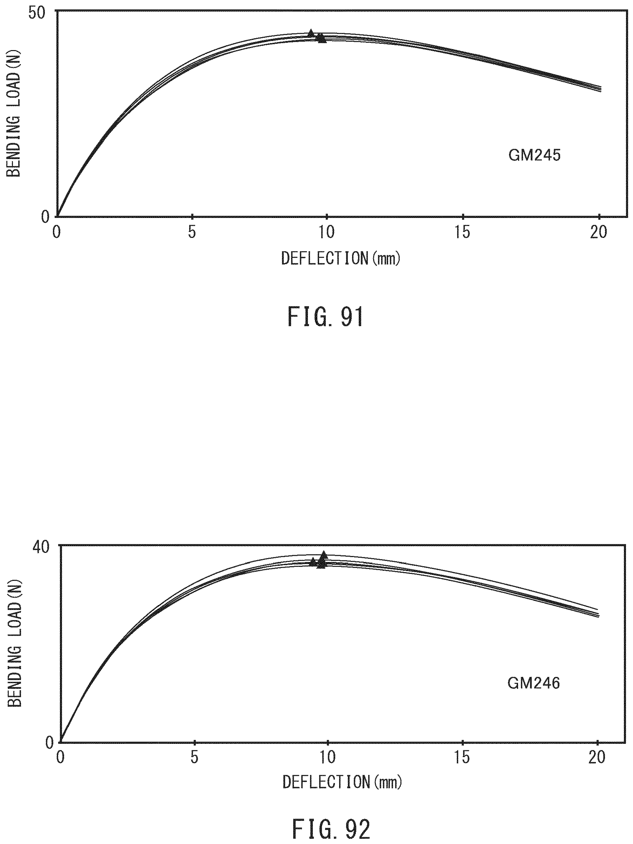

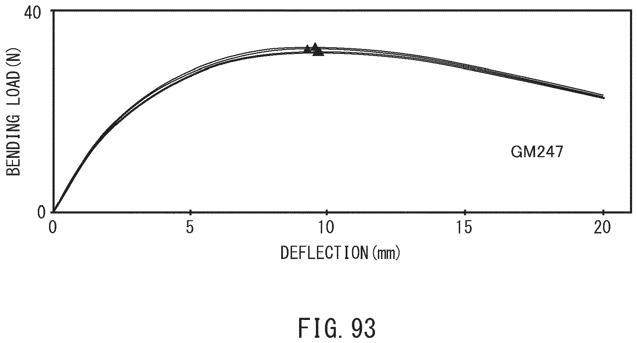

The measurements from the above measuring method are shown in Table 16 and FIGS. 83 to 86. Further, graphs illustrating the relationships between deflection and bending load in the bending tests conducted on these samples are shown in FIGS. 87 to 93.

**[Table 16]**

| | Sample | Base material (parts by weight) | | Additive (parts by weight) | | Flexural modulus (MPa) | Maximum flexural stress (MPa) | Deflection corresponding to maximum stress (mm) | Izod impact value (kJ/m²) |
|---|---|---|---|---|---|---|---|---|---|
| | | PCRM | PVB | Rubber | | | | | |
| | | PCRM (2) | Standard PVB | Block SBR | BR | | | | |
| Comparative ex. | GM226 | 100 | | | | 645.59 | 25.65 | 10.19 | 6.37 |
| Inventive ex. | GM237 | 85 | 15 | 5 | | 523.71 | 20.53 | 10.06 | 7.07 |
| | GM238 | 85 | 15 | 10 | | 478.92 | 18.58 | 10.42 | 11.45 |
| | GM239 | 85 | 15 | 15 | | 443.60 | 16.87 | 10.01 | 20.93 |
| | GM245 | 85 | 15 | | 5 | 541.05 | 20.35 | 9.64 | 7.17 |
| | GM246 | 85 | 15 | | 10 | 477.33 | 17.25 | 9.68 | 17.85 |
| | GM247 | 85 | 15 | | 15 | 426.12 | 15.10 | 9.60 | 27.67 |

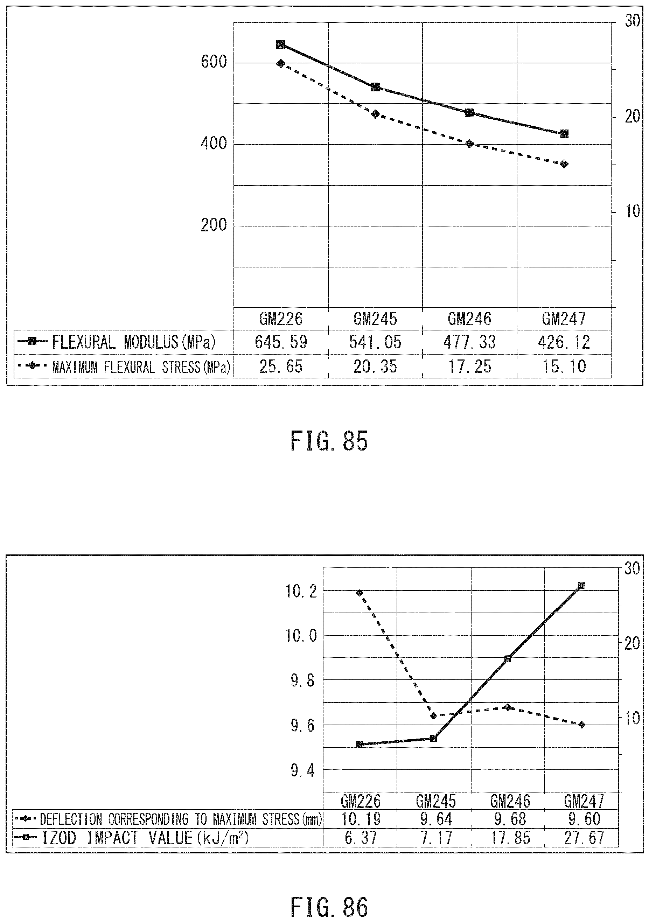

As can be understood from FIGS. 83 and 85, the flexural strength decreased as block SBR or BR was added. On the other hand, as can be understood from FIGS. 84 and 86, the impact resistance significantly improved as block SBR or BR was added. Other methods for improving flexural strength may include further adding a hard resin to the PVB resin composition, or adjusting the amount of PVB resin added.

Block SBR has low aggregability and easy to treat, making it easy to pelletize and use as a modifier. On the other hand, BR has high aggregability and is not easy to treat, making it difficult to pelletize. Thus, from the viewpoint of ease of treatment, block SBR is more preferable than BR.

As can be understood from FIGS. 87 to 93, even when block SBR or BR was added, no significant difference from 100 % PCRM (sample GM197) was observed in terms of toughness, and no break or damage from a crack occurred even at a deflection of 20 mm.

### [16: Considerations about Additives]

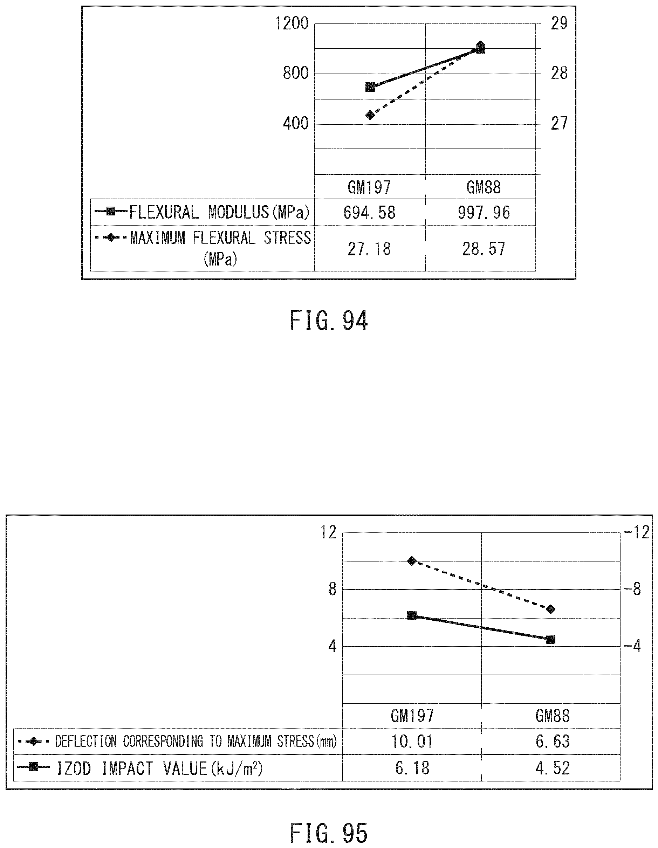

The inventors investigated PVB resin compositions containing a plurality of additives. To do this, GM197 and GM88 with the compositions shown in Table 17 were produced. Then, their flexural properties (i.e. flexural modulus, maximum flexural stress and deflection corresponding to maximum flexural stress) and impact resistance (i.e. Izod impact value) were measured. Further, graphs illustrating the relationships between deflection and bending load in the bending tests conducted on these samples are shown in FIGS. 94 and 95.

The used additives were SAN(III) mentioned above (under the product name of "Litac-A 120PCF" from Nippon A & L Inc.), maleic anhydride-modified polypropylene (PP-g-MAH) (under the product name of "Umex 1010" from Sanyo Chemical Industries, Ltd.), olefin crystal-ethylene butylene-olefin crystal block polymer (under the product name of "Dynaron 6200P" from JSR Corporation), SAN grafted low-density PE (under the product name of "Modiper A1401" from NOF Corporation), SAN grafted PP (under the product name of "Modiper A3400" from NOF Corporation), and maleic anhydride-modified polyethylene (PE-g-MAH) (from Kayaku Akzo Corporation). The olefin crystal-ethylene butylene-olefin crystal block polymer was added to improve the impact resistance of a PCRM.

**[Table 17]**

| | Sample | Base material (parts by weight) | | Additive (parts by weight) | | Flexural modulus (MPa) | Maximum flexural stress (MPa) | Deflection corresponding to maximum stress (mm) | Izod impact value (kJ/m²) |
|---|---|---|---|---|---|---|---|---|---|
| | | PCRM | PVB | | | | | | |
| | | PCRM (2) | Standard PVB | | | | | | |
| Comparative ex. | GM197 | 100 | - | - | | 694.58 | 27.18 | 10.01 | 6.18 |
| | | | | Radical initiator | | | | | |
| | | | | (Percumyl D) | : 0 | | | | |
| | | | | Graft copolymer | | | | | |
| | | | | (Modiper A1401) | : 2.5 | | | | |
| | | | | Graft copolymer | | | | | |
| Inventive ex. | GM88 | 85 | 15 | (Modiper A3400) | : 2.5 | 997.96 | 28.57 | 6.63 | 4.52 |
| | | | | SAN resin | | | | | |
| | | | | (SAN(III)(vir.)) | : 30 | | | | |
| | | | | PP-g-MAH | : 2.5 | | | | |
| | | | | Dynaron 6200P | : 2.5 | | | | |
| | | | | PE-g-MAH | : 5.0 | | | | |

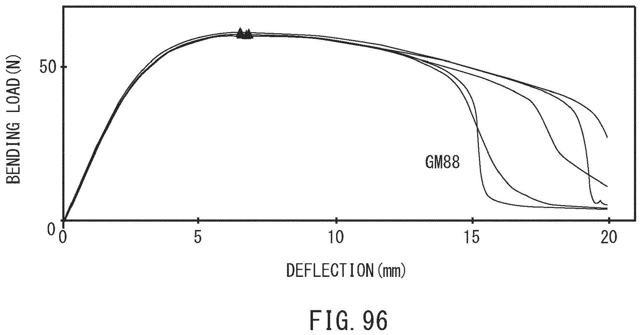

The measurements from the above measuring method are shown in Table 17 and FIGS. 94 and 95. Further, a graph illustrating the relationship between deflection and bending load in the bending tests conducted on sample GM88 is shown in FIG. 96.

As can be understood from FIGS. 94 and 95, sample GM88 with six additives mixed in had a better flexural strength than sample GM197, and the decrease in the impact resistance was reduced. Further as can be understood from FIG. 96, in sample GM88, although a crack occurred at a deflection larger than 13 mm, a good toughness for practical applications was obtained.

### INDUSTRIAL APPLICABILITY

The present invention is useful as a PVB resin composition, a molding containing such a composition and a method of manufacturing such a PVB resin composition.

## Claims

1. A polyvinyl butyral resin composition comprising:
a first rubber composition or a first resin; and
a polyvinyl butyral resin,
wherein the first resin is at least one selected from the group including a polyolefin-based resin, a polystyrene-based resin, polyvinyl chloride, polyethylene terephthalate, vinyl acetate, polycarbonate, and an acrylic resin, and a copolymer thereof.

2. The polyvinyl butyral resin composition according to claim 1, wherein the first rubber composition or the first resin and the polyvinyl butyral resin are contained in a weight ratio of 3:97 to 55:45.

3. The polyvinyl butyral resin composition according to claim 1 or 2, wherein:
the polyolefin-based resin is polyethylene and/or polypropylene,
the polystyrene-based resin is polystyrene, an
acrylonitrile-butadiene-styrene resin and/or a styrene acrylonitrile resin, and
the first rubber composition is at least one selected from the group including a synthetic rubber including a styrene-butadiene rubber (SBR), a nitrile rubber (NBR) or a silicone rubber, and a natural rubber (NR).

4. The polyvinyl butyral resin composition according to claim 1 or 2, further comprising: a third rubber composition,
wherein the first resin is a styrene acrylonitrile resin.

5. The polyvinyl butyral resin composition according to claim 4, further comprising a radical initiator.

6. The polyvinyl butyral resin composition according to claim 5, wherein the radical initiator is added in an amount of 0.01 to 0.1 parts by weight, where the total amount of the first resin and the polyvinyl butyral resin is 100 parts by weight.

7. The polyvinyl butyral resin composition according to any one of claims 4 to 6, wherein the styrene acrylonitrile resin and the polyvinyl butyral resin are contained in a weight ratio of 85:15 to 95:5.

8. The polyvinyl butyral resin composition according to any one of claims 4 to 7, wherein the third rubber composition is a nitrile rubber or a block-type styrene-butadiene rubber.

9. The polyvinyl butyral resin composition according to claim 1 or 2, wherein the first resin is a plastic container-recycled material mainly composed of a polyolefin-based resin.

10. The polyvinyl butyral resin composition according to claim 9, wherein the first rubber composition is a block-type styrene-butadiene rubber or a butadiene rubber.

11. The polyvinyl butyral resin composition according to claim 9 or 10, further comprising MARICOM (registered trademark).

12. A molding comprising:
a second resin or a second rubber composition; and
the polyvinyl butyral resin composition according to any one of claims 1 to 3 added to the second resin or the second rubber composition.

13. The molding according to claim 12, wherein the first resin and the second resin are of the same kind of resin, or the first rubber composition and the second rubber composition are of the same kind of rubber composition.

14. A method of manufacturing a polyvinyl butyral resin composition, comprising:
a first step in which a first resin or a first rubber composition and a polyvinyl butyral resin are mixed while being heated at a temperature lower than the melting point of the polyvinyl butyral resin or the melting point of the first resin or the softening point of the first rubber composition; and
a second step in which the mixture resulting from the kneading is cooled.

15. The method of manufacturing a polyvinyl butyral resin composition according to claim 14, wherein the second step cools the mixture with flowing water.

16. The method of manufacturing a polyvinyl butyral resin composition according to claim 14 or 15, wherein the heating in the first step occurs at a temperature lower than the melting point of the polyvinyl butyral resin.

17. The method of manufacturing a polyvinyl butyral resin composition according to any one of claims 14 to 16, wherein the first step feeds the first resin or first rubber composition and the polyvinyl butyral resin into a kneading chamber and mixes them by causing them to hit an inner wall of the kneading chamber and thereby kneading them.

18. The method of manufacturing a polyvinyl butyral resin composition according to claim 14, wherein the first step mixes the first resin or first rubber composition and the polyvinyl butyral resin by rolling them into a pair of first rollers.

19. The method of manufacturing a polyvinyl butyral resin composition according to claim 18, further comprising: a third step in which the mixture discharged from the pair of first rollers is fed into a pair of second rollers including at least a roller having a plurality of recesses on its periphery and the mixture is molded into the shape of the recesses,
wherein the second step cools the mixture molded by the third step in air.

20. The method of manufacturing a polyvinyl butyral resin composition according to claim 14, further comprising:
a fourth step, preceding the first step, in which some of the first resin is mixed with a radical initiator; and
a fifth step in which the mixture resulting from the fourth step, the polyvinyl butyral resin and a fourth rubber composition are mixed while being heated at a temperature lower than the melting point of the first resin,
wherein the first step mixes the mixture resulting from the fifth step with the rest of the first resin.

21. The method of manufacturing a polyvinyl butyral resin composition according to claim 20, wherein in the fourth step, the some of the first resin is processed into powder.

22. The method of manufacturing a polyvinyl butyral resin composition according to claim 20 or 21, wherein the first resin is a styrene acrylonitrile resin.

23. The method of manufacturing a polyvinyl butyral resin composition according to any one of claims 20 to 22, wherein the kneading in the first step is performed by a pressure kneader and an extruder.

24. The method of manufacturing a polyvinyl butyral resin composition according to claim 23, wherein the extruder is a screw-type extruder or a plunger-type extruder.

25. The polyvinyl butyral resin composition according to claim 1, wherein:
when the flexural modulus of the polyvinyl butyral resin composition measured in a three-point bending test is not less than 1800 MPa, and
when it is supposed that, on a bending load (Y)-deflection (X) curve obtained from the three-point test, the deflections corresponding to the bending load of 90 % (0.9Y) of the maximum bending load (Y) of the polyvinyl butyral resin composition are denoted by X1 and X2 (X1<X2), then, X2>10 mm.
